# EUROPÄISCHE PATENTSCHRIFT

(11) **EP 0 478 503 B1**
(45) Veröffentlichungstag und Bekanntmachung des Hinweises auf die Patenterteilung: **16.07.1997**
(21) Anmeldenummer: 91810734.3
(22) Anmeldetag: 17.09.1991
(51) Int. Cl.: C09B 67/22, C09B 62/002, D06P 1/38

(54) **Faserreaktive Farbstoffe und Farbstoffmischungen und deren Verwendung**
Fibre reactive dyes and mixtures of dyes and their utilization
Colorants et mélanges de colorants réactifs avec des fibres et leur utilisation

(30) Priorität: 25.09.1990 CH 3077/90
(43) Veröffentlichungstag der Anmeldung: 01.04.1992
(60) Teilanmeldung: 96109923.1
(73) Patentinhaber: Ciba Specialty Chemicals Holding Inc., 4057 Basel (CH)
(72) Erfinder: Tzikas, Athanassios, Dr., CH-4133 Pratteln (CH)

(56) Entgegenhaltungen:
- EP-A- 0 458 743
- DE-A- 2 611 550
- GB-A- 2 226 336
- Rys, Zollinger "FARBSTOFFCHEMIE", 3. Aufl. (1982); Seiten 76 - 85

## Beschreibung

Die vorliegende Erfindung betrifft Mischungen von faserreaktiven Farbstoffen, die zum Färben von cellulosehaltigen Fasermaterialien aus wässrigem Bad sowie zum Bedrucken cellulosehaltiger Fasermaterialien geeignet sind, die sich für Ausziehfärbeverfahren und Kontinuefärbeverfahren eignen, und die nass- und lichtechte Färbungen ergeben.

Es sind bereits aus der GB-A-2226336 Farbstoffgemische für das Trichromiefärben von Textilfasern enthaltend einen gelbfärbenden Farbstoff der unten angegebenen Formel (1) und einen rotfärbenden Farbstoff der unten angegebenen Formel (2) bekannt, worin jedoch die Farbstoffreste A₁, A₂ und A₃ verschieden voneinander sind.

Gegenstand der Erfindung sind Farbstoffmischungen, dadurch gekennzeichnet, dass sie Farbstoffe der Formeln 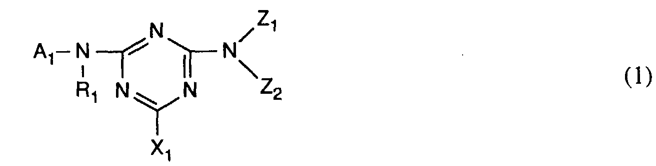 und 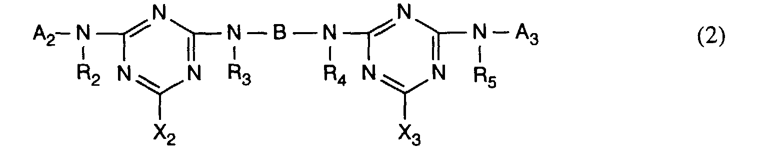 enthalten, worin A₁, A₂ und A₃ identisch sind und jeweils der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes, R₁, R_{2,} R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann, B ein aliphatisches Brückenglied, und Z₁ und Z₂ Wasserstoff oder ein aliphatischer, aromatischer oder heterocyclischer Rest sind, oder Z₁ und Z₂ mit dem sie verbindenden Stickstoffatom einen fünf- bis siebengliedrigen Ring bilden, der ausser C-Atomen weitere Heteroatome enthalten kann, und X₁, X₂ und X₃ unabhängig voneinander Fluor, Chlor, Brom, Sulfo oder Carboxypyridinium bedeuten.

Der Rest A₁, A₂ bzw. A₃ kann an seinem Grundgerüst die bei organischen Farbstoffen üblichen Substituenten gebunden enthalten.

Als Beispiele für weitere Substituenten im Rest A₁, A₂ bzw. A₃ seien genannt: Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, insbesondere Alkanoylaminogruppen, wie Acetylamino, Propionylamino oder Benzoylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo sowie faserreaktive Reste. Vorzugsweise enthält der Rest A₁, A₂ bzw. A₃ eine oder mehrere Sulfonsäuregruppen. Reaktivfarbstoffe der Formeln (1) und (2), worin A₁, A₂ bzw. A₃ der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest R₁, R₂, R₃, R₄ bzw. R₅ ist, falls es sich um einen Alkylrest handelt, geradkettig oder verzweigt; er kann weitersubstituiert sein, z.B. durch Halogen, Hydroxy, Cyan, C₁-C₄-Alkoxy, C₁-C₄-Alkoxycarbonyl, Carboxy, Sulfamoyl, Sulfo oder Sulfato. Als Beispiele für R₁, R₂, R₃, R₄ und R₅ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise sind R₁, R₂, R₃, R₄ und R₅ unabhängig voneinander Wasserstoff, Methyl oder Aethyl.

Die Reste X₁, X₂ und X₃ bedeuten unabhängig voneinander Fluor, Chlor, Brom, Carboxypyridinium oder eine Sulfogruppe. Vorzugsweise ist X₁, X₂ und X₃ Fluor oder Chlor.

Der Ausdruck aliphatisches Brückenglied schliesst auch cycloaliphatische Reste ein. So kann B ein geradkettiger oder verzweigter C₁-C₁₀-Alkylenrest sein; insbesondere kommt ein Alkylenrest mit 2 bis 6 Kohlenstoffatomen in Betracht, z.B. Aethylen, Propylen, Butylen, Hexylen oder Cyclohexylen. Der Rest B kann weitere Substituenten enthalten, z.B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propoxy und Isopropoxy, Carboxy oder Sulfo. B ist vorzugsweise C₂₋₆-Alkylen und besonders bevorzugt Aethylen.

Als substituierte Aminogruppen 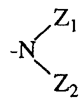 kommen z.B. in Betracht: Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechs-gliedrigen N-heterocyclischen Verbindungen in Betracht, die als weitere Heteroatome Stickstoff, Sauerstoff und Schwefel enthalten können. Die oben genannten Alkyl-, Cycloalky-, Aralkyl- und Arylreste, die heterocyclischen Reste sowie die N-heterocyclischen Ringe können weitersubstituiert sein, z.B. durch: Halogen, wie Fluor, Chlor und Brom, Nitro, Cyan, Trifluormethyl, Sulfamoyl, Carbamoyl, C₁-C₄-Alkyl, C₁-C₄-Alkoxy, Acylaminogruppen, wie Acetylamino, Ureido, Hydroxy, Carboxy, Sulfomethyl und Sulfo. Die Aminogruppe 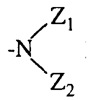 kann ferner faserreaktive Reste enthalten.

Als Beispiele für den Aminorest 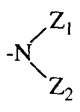 in Formel (1) seien genannt: -NH₂, Methylamino, Aethylamino, Propylamino, Isopropylamino, Butylamino, β-(Acetylamino)äthylamino, Hexylamino, β-Methoxyäthylamino, γ-Methoxypropylamino, β-Aethoxyäthylamino, N,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamno, Cyclohexylamino, N-Methyl-N-phenylamino, N-Aethyl-N-phenylamino, N-Propyl-N-phenylamino, N-Butyl-N-phenylamino, N-β-Cyanäthyl-N-phenylamino, N-Aethyl-2-methylphenylamino, N-Aethyl-4-methylphenylamino, N-Aethyl-3-sulfophenylamino, N-Aethyl-4-sulfophenylamino, Phenylamino, Toluidino, Xylidino, Chloranilino, Anisidino, Phenetidino, 2-, 3- und 4-Sulfoanilino, 2,5-Disulfoanilino, Sulfomethylanilino, N-Sulfomethylanilino, 3- und 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1-)-amino, 4,6,8-Trisulfonaphthyl-(1)-amino, 6-Sulfonaphthyl-(2)-amino, Pyridyl-(2)-amino, Morpholino, Piperidino und Piperazino.

Ferner sind in Betracht zu ziehen Reaktivfarbstoffe der Formeln (1) und (2), worin der Rest A₁, A₂ bzw. A₃ noch einen weiteren Reaktivrest einschliesst. Die zusätzlichen, in A₁, A₂ bzw. A₃ eingeschlossenen Reaktivreste können über Aminogruppen oder in anderer Weise, z.B. durch eine direkte Bindung an A₁, A₂ bzw. A₃ gebunden sein.

Ein gegebenenfalls in A₁, A₂ bzw. A₃ oder Z₁ bzw. Z₂ eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom oder eine abspaltbare Gruppe substituierter carbo- oder heterocyclischer 4-, 5- oder 6-Ringe enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogenatome enthaltender sechsgliedriger heterocyclischer Rest, wie ein Halogentriazin- oder Halogenpyrimidinrest oder ein aliphatischer Acylrest, wie ein Halogenacetyl-oder Halogenpropionylrest.

Für die in A₁, A₂, A₃, Z₁ und Z₂ eingeschlossenen zusätzlichen Reaktivreste kommen insbesondere heterocyclische Reste in Betracht, welche mindestens einen abspaltbaren Substituenten an einen heterocyclischen Rest gebunden enthalten, unter anderem solche, die mindestens einen reaktiven Substituenten an einen 5- oder 6-gliedrigen heterocyclischen Ring gebunden enthalten, wie an einen Monazin-, Diazin-, Triazin- z.B. Pyridin-, Pyrimidin-, Pridazin-, Pyrazin-, Thiazin-, Oxazin oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinnolin-, Chinazolin-, Chinoxalin-, Acridin-, Phenazin- und Phenanthridin-Ring-System; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen: Halogen (Cl, Br oder F), Ammonium einschliesslich Hydrazinium, Sulfonium, Sulfonyl, Azido-(N₃), Rhodanido, Thio, Thiolether, Oxyether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlortriazinyl-6-, 2-Alkyl-amino-4-chlortriazinyl-6-, wie 2-Methylamino-4-chlortriazinyl-6-, 2-Ethylamino- oder 3-Propylamino-4-chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlor-triazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituieres Aryloxy4-chlortriazinyl-6-, wie 2-Phenoxy-4-chlortriazinyl-6-, 2-(p-Sulfophenyl)-oxi-4-chlortriazinyl-6-, 2-(o-, m- oder p-Methyl- oder Methoxyphenyl)-oxi4-chlortriazinyl-6-, 2-Alkylmercapto- oder 2-Arylmercapto- oder 2-(substituiertes Aryl)-mercapto-4-chlortriazinyl-6-, wie 2-β-Hydroxyethyl-mercapto-4-chlortriazinyl-6-, 2-Phenylmercapto-4-chlor-triazinyl-6-, 3-(4'-Methylphenyl)-mercapto-4-chlortriazinyl-6-, 2-(2',4'-Dinitro)-Phenylmercapto-4-chlortriazinyl-6-, 2-Methyl-4-chlortriazinyl-6-, 2-Phenyl-4-chlor-triazinyl-6-, 2,4-Difluor-triazinyl-6-, Monofluortriazinylreste, die durch Amino-, Alkylamino-, Aralkylamino-, Acylaminogruppen substituiert sind, wobei Alkyl, insbesondere gegebenenfalls substituiertes C₁-C₄-Alkyl, Aralkyl, insbesondere gegebenenfalls substituiertes Phenyl-, C₁-C₄-Alkyl und Aryl, insbesondere gegebenenfalls durch Sulfo-, Alkyl-, insbesondere C₁-C₄-Alkyl-, Alkoxy, insbesondere C₁-C₄-Alkoxy, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethyl-amino-4-fluor-triazinyl-6, 2-iso-Propylamino-4-fluortriazinyl-6, 2-Dimethylamino-4-fluor-triazinyl-6, 2-Diethylamino-4-fluor-triazinyl-6, 2-β-Methoxy-ethylamino-4-fluortriazinyl-6, 2-β-Hydroxyethylamino-4-fluor-triazinyl-6, 2-Di-(β-hydroxyethylamino)-4-fluortriazinyl-6-, 2-β-Sulfoethylamino-4-fluor-triazinyl-6, 2-β-Sulfoethyl-methylamino-4-fluor-triazinyl-6, 2-Carboxymethylamino-4-fluortriazinyl-6, 2-β-Cyanethyl-amino-4-fluor-triazinyl-6, 2-Benzolamino-4-fluor-triazinyl-6, 2-β-Phenylethylamino-4-fluor-triazinyl-6, 2-Benzyl-methylamino-4-fluor-triazinyl-6, 2-(2'-, 3'- oder 4'-Sulfobenzyl)-amino-4-fluor-triazinyl-6, 2-Cyclohexylamino-4-fluortriazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluortriazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluortriazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(2'-Carboxy-4-sulfophenyl)amino-4-fluor-triazinyl-6, 2-(6'-Sulfonaphthyl-(2')-amino-4-fluor-triazinyl-6, 2-(4',8'-Disulfonaphthyl-(2'))-amino-4-fluor-triazinyl-6, 2-(6',8'-Disulfonaphthyl(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl(2'))-4-fluor-triazinyl-6, 2-(3',6',8'-Trisulfonaphthyl-(2'))-4-fluor-triazinyl-6, 2-(3',6' -Disulfonaphthyl-(1'))-4-fluor-triazinyl-6' Mono-, Di- oder Trihalogenpyrimidinylreste, wie 2,4-Dichlorpyrimidinyl-6, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methyl-thio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Mono-chlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazin6'-yl-1')-phenylsulfonyl- oder -carbonyl-, β-(4',5'-Dich1orpyridazon-6'-yl-1')ethyl-carbonyl, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)carbamyl, N-Methyl- oder N-Ethyl-N-(2,4-dichlortriazinyl-6)-amino-acetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl4-pyrimidinyl-, 2-Fluor-6-carbonamido-4-pyrimidinyl-, 2-Fluor-6-carbomethoxy-4-pyrimidinyl, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy4-pyrimidinyl-, 2,6-Difluor-5-trifluormethyl-4-pyrimidinyl-, 6-Fluor-5-chlor-pyrimidinyl-4, 6-Fluor-5-trifluormethyl-pyrimidinyl-4, 6-Fluor-2-methylpyrimidinyl-4, 6-Fluor-5-chlor-2-methylpyrimidinyl-4, 5,6-Difluor-pyrimidinyl-4, 6-Fluor-5-chlor-2-trifluormethylpyrimidinyl-4, 6-Fluor-2-phenylpyrimidinyl-4, 6-Fluor-5-cyan-pyrimidinyl-4, 6-Fluor-5-nitropyrimidinyl-4, 6-Fluor-5-methyl-sulfonyl-pyrimidinyl4, 6-Fluor-5-phenylsulfonylpyrimidinyl-4, sulfonylgruppenhaltige Triazinreste, wie 2,4-Bis-(phenylsulfonyl)triazinyl-6, 2-(3'-Carboxyphenyl)-sulfonyl-4-chlortriazinyl-6, 2-(3'-Sulfophenyl)sulfonyl-4-chlortriazinyl-6, 2,4-Bis-(3'-carboxyphenylsulfonyl)-triazinyl-6; sulfonylgruppenhaltige Pyrimidinringen, wie 2-Carboxymethylsulfonyl-pyrimidinyl-4-, 2-Methylsulfonyl-6-methylpyrimidinyl-4, 2-Methylsulfonyl-6-ethyl- pyrimidinyl-4-, 2-Phenylsulfonyl-5-chlor-6-methyl-pyrimidinyl-, 2,6-Bis-methylsulfonyl-pyrimidinyl-4-, 2,6-Bis-methyl-sulfonyl-5-chlor-pyrimidinyl-4-, 2,4-Bis-methylsulfonyl-pyrimidin-5-sulfonyl-, 2-Methylsulfonylpyrimidinyl-4, 2-Phenyl-sulfonyl-pyrimidinyl-4-, 2-Trichlormethylsulfonyl-6-methyl-pyrimidinyl-4-, 2-methylsulfonyl-5-chlor-6-methylpyrimidinyl-4-, 2-Methylsulfonyl-5-brom-6-methyl-pyrimidinyl-4-, 2-Methyl-sulfonyl-5-chlor-6-ethyl-pyrimidinyl-4-, 2-Methyl-sulfonyl-5-chlor-6-chlormethyl-pyrimidinyl-4-, 2-Methyl-sulfonyl-4-chlor-6-methylpyrimidin-5-sulfonyl, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethylpyridinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carbonyl-pyrimidinyl-4-, 2-Methylsulfonyl-5-sulfopyrimidinyl-4-, 2-Methylsulfonyl-6-carbomethoxy-pyrimidinyl-4-, 2-Methylsulfonyl-5-carboxypyrimidinyl-4-, 2-Methylsulfonyl-5-cyan-6-methoxypyrimidinyl-4-, 2-Methylsulfonyl-5-chlorpyrimidinyl-4-, 2-Sulfoethylsulfonyl-6-methyl-pyrimidinyl-4-, 2-Methyl-sulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl, 2,6-Bis(methyl-sulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl-, ammoniumgruppenhaltige Triazinringe, wie Trimethylammonium-4-phenylamino- oder -4-(o-, m- oder p-sulfophenyl)-aminotriazinyl-6-, 2- (1,1-Dimethylhydrazinium)-4-phenylamino- oder -4-(o-, m- oder p-sulfophenyl)-aminotriazinyl-6, 2-(2-Isopropyliden- 1,1 dimethyl)hydrazinium4-phenylamino- oder 4-(o-, m- oder p-sulfophenyl)-amino-triazinyl-6-, 2-N-Aminopyrrolidinium- oder 2-Amino-piperidinium-4-phenylamino- oder -4-(o-, m- oder p-sulfophenyl)-aminotriazinyl-6-, 2-N-Aminopyrrolidinium- oder 2-N-Aminopiperidinium-4-phenylamino-oder 4-(o-, m- oder p-Sulfophenyl)-aminotriazinyl-6-, ferner 4-Phenylamino- oder -4-(sulfophenylamino)-triazinyl-6-Reste, die in 2-Stellung über eine Stickstoffbindung das 1,4-Bis-azabicyclo-[2,2,2]-octan oder das 1,2-Bis-aza-bicyclo-[0,3,3]-octan quartär gebunden enthalten, 2-Pyridinium4-phenylamino- oder 4-(o-, m- oder p-Sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethylamino- oder Alkoxy-, wie Methoxy- oder Alkoxy-, oder Aroxy-, wie Phenoxy- oder Sulfophenoxy-Gruppen substituiert sind: 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methyl-sulfonyl- oder 2-Ethoxysulfonylbenzthiazol-5-oder 6-sulfonyl- oder -carbonyl-, 2-Phenylsulfonyl-benzthiazol-5- oder -6-sulfonyl- oder carbonyl- und die entsprechenden im ankondensierten Benzolring Sulfogruppen enthaltenden 2-Sulfonylbenzthiazol-5- oder 6-carbonyl- oder -sulfonyl-Derivate, 2-Chlorbenzoxazol-5- oder -6-carbonyl- oder -sulfonyl-, 2-Chlor-benzimidazol-5- oder -6-carbonyl- oder sulfonyl-, 2-Chlor-1-methylbenzimidazol-5- oder 6-carbonyl- oder sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl oder auch die Reste 5-Chlor-2,6-difluor-1,3-dicyanphenyl, 2,4-Difluor-1,3,5-tricyanphenyl, 2,4,5-Trifluor-1,3-dicyan-phenyl, 2,4-Dichlor-5-methylsulfonyl-pyrimidinyl-6, 2,4-Trichlor-5-ethylsulfonyl-pyrimidinyl-6, 2-Fluor-5-methylsulfonyl-6'-(2'-sulfophenylamino)-pyrimidinyl-4, 2,5-Dichlor-6-methylsulfonyl-pyrimidinyl-4.

Desweiteren sind Reaktivgruppen der aliphatischen Reihe zu nennen, wie Acrylolyl-, Mono-, Di- oder Trichloracryloyl-, wie -CO-CH=CH-Cl, -CO-CCl=CH₂, -CO-CCl=CH-CH₃, ferner -CO-CCl=CH-COOH, -CO-CH=CCl-COOH, β-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1-oder -sulfonyl-1-, β-(2,2,3,3-Tetrafluorcyclobutyl-1)-aryloxy-, α- oder β-Bromacrylolyl-, *α*-oder β-Alkyl- oder Arylsulfoacrylolyl-Gruppe, wie α- oder β-Methylsulfonylacrylolyl, Chloracetyl.

Als aliphatischer Rest Z₁ bzw. Z₂ in Formel (1) kommt z.B. ein gegebenenfalls substituierter C₁-C₈-Alkylrest oder ein gegebenenfalls substituierter C₅-C₇-Cycloalkylrest in Betracht.

Z₁ und Z₂ als C₁-C₈-Alkyl sind z.B. Methyl, Aethyl, Propyl, Isopropyl, Butyl, Isobutyl, sek.-Butyl, tert.-Butyl, n-Pentyl, n-Hexyl oder n-Octyl. Die C₁-C₈-Alkylreste Z₁ und Z₂ können substituiert sein, z.B. durch Halogen, Hydroxy, Cyan, Carboxy, C₁-C₄-Alkoxy, C₂-C₄-Alkanoyl, Hydroxy-C₂-C₄-alkoxy, Sulfo, Sulfato, Phenyl und Naphthyl, wobei der Phenyl- oder Naphthylrest weitersubstituiert sein kann, z.B. wie für A₁, A₂ oder A₃ angegeben. Als Beispiele seien genannt: β-Carboxyäthyl, β-Cyanäthyl, Sulfomethyl, β-Sulfoäthyl, Benzyl, Phenäthyl, β-Acetylaminoäthyl.

Als C₅-C₇-Cycloalkyl kommt für Z₁ und Z₂ der Cyclopentyl-, Cyclohexyl- oder Cycloheptyl-Rest in Betracht, der weitersubstituiert sein kann z.B. durch C₁-C₄-Alkyl. Als Beispiele seien genannt: Cyclopentyl, Cyclohexyl, 4-Methylcyclohexyl Cycloheptyl.

Als aromatischer Rest kommt für Z₁ und Z₂ insbesondere Phenyl oder Naphthyl sowie die z.B. durch C₁-C₄-Alkyl, wie z.B. Methyl, Aethyl, n-Propyl, Isopropyl, n-Butyl, C₁-C₄-Alkoxy, wie z.B. Methoxy oder Aethoxy, Halogen, wie z.B. Fluor, Chlor oder Brom, Carboxy, Hydroxy oder Sulfo substituierte Phenyl- oder Naphthylreste in Betracht.

Als heterocyclischer Rest kommt für Z₁ und Z₂ insbesondere ein Furan-, Thiophen-, Pyrazol-, Pyridin-, Pyrimidin-, Chinolin-, Benzimidazol-, Benzthiazol- und Benzoxazolrest in Betracht, wobei die genannten Reste substituiert sein können durch die für A₁, A₂ bzw. A₃ angegebenen Substituenten.

Bilden Z₁ und Z₂ zusammen mit dem sie verbindenden Stickstoffatom, gegebenenfalls unter Einschluss eines weiteren Heteroatoms einen stickstoffhaltigen heterocyclischen Ring, so handelt es sich z.B. um den Piperidinyl-, Piperazinyl- oder Morpholinyl-Rest.

Bevorzugte Farbstoffmischungen der Reaktivfarbstoffe der Formeln (1) und (2) sind dadurch gekennzeichnet, dass
a) A₁, A₂, A₃, Z₁ und Z₂ unabhängig voneinander faserreaktive Reste enthalten,
b) das Gewichtsverhältnis der Farbstoffe der Formeln (1):(2) 5:95 bis 95:5, insbesondere 30:70 bis 70:30 ist,
c) B -(CH₂ 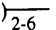 oder gegebenenfalls durch C₁-C₄-Alkyl substituiertes Cyclohexylen ist,
d) der Rest -N(Z₁)Z₂ -NH₂, 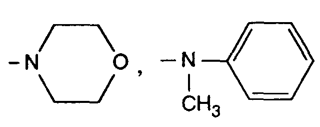 oder -NH-(CH₂)₂-NH-CO-CH₃ ist,
e) X₁, X₂ und X₃ unabhängig voneinander Fluor oder Chlor, insbesondere Fluor, sind,
f) R₁, R₂, R₃, R₄ und R₅ unabhängig voneinander Wasserstoff, Methyl oder Aethyl sind. Insbesondere bedeuten R₃ und R₄ Wasserstoff,
g) A₁, A₂ und A₃ je ein Monoazo- oder Disazofarbstoffrest, Metallkomplexazofarbstoffrest oder Formazanfarbstoffrest sind.

Besonders bevorzugte Farbstoffmischungen der Reaktivfarbstoffe der Formeln (1) und (2) sind dadurch gekennzeichnet, dass
a) X₁, X₂ und X₃ Fluor bedeuten,
b) R₃ und R₄ je ein Wasserstoffatom bedeuten,
c) R₂ die gleiche Bedeutung wie R₅ hat,
d) A₁, A₂ und A₃ je ein Azo-, Metallkomplexazo- oder Formazanfarbstoffrest sind.

Besonders wichtig sind Farbstoffmischungen der Reaktivfarbstoffe der Formeln (1) und (2), worin A₁, und A₂ und A₃ je ein Rest der folgenden Formeln (3) bis (15) sind: 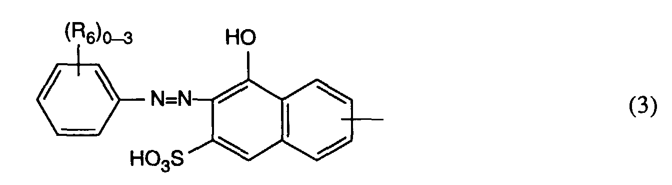 worin R₆ für 0 bis 3 Substituenten aus der Gruppe C₁-C₄-Alkyl, C₁-C₄-Alkoxy, Halogen, Carboxy und Sulfo steht. 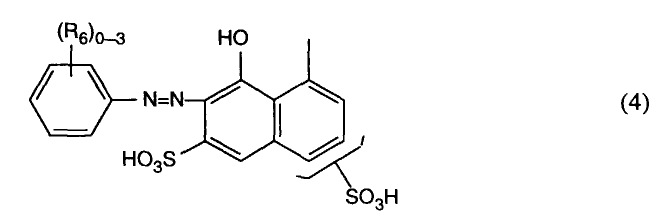 worin R₆ für 0 bis 3 Substituenten aus der Gruppe C₁-C₄-Alkyl, C₁-C₄-Alkoxy, Halogen, Carboxy und Sulfo steht. 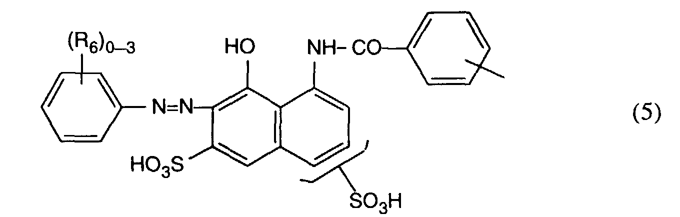 worin R₆ für 0 bis 3 Substituenten aus der Gruppe C₁-C₄-Alkyl, C₁-C₄-Alkoxy, Halogen, Carboxy und Sulfo steht. 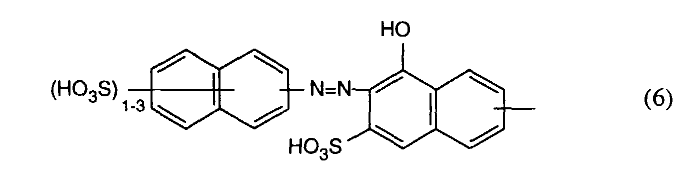 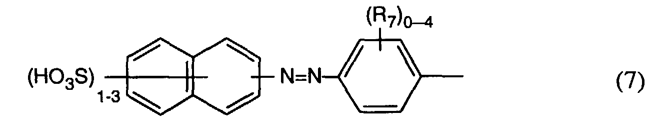 worin R₇ für 0 bis 4 Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo unabhängig voneinander, steht. 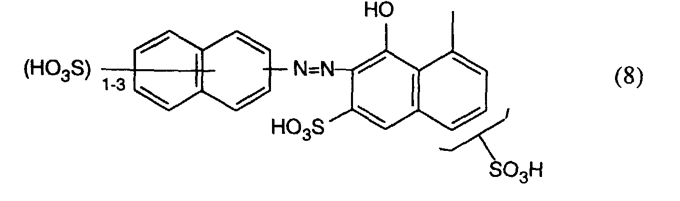 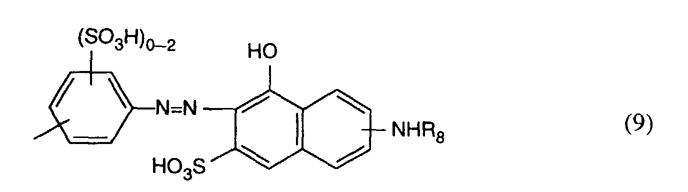 worin R₈ C₁-C₄-Alkanoyl oder Benzoyl ist. 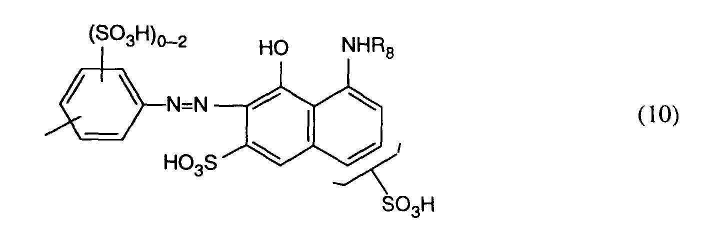 worin R₈ C₁-C₄-Alkanoyl oder Benzoyl ist. 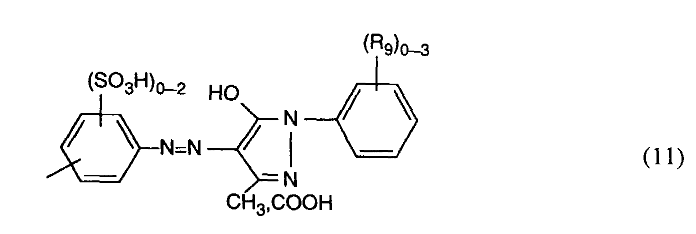 worin R₉ für 0 bis 3 Substituenten aus der Gruppe C₁-C₄-Alkyl, C₁-C₄-Alkoxy, Halogen, Carboxy und Sulfo steht. 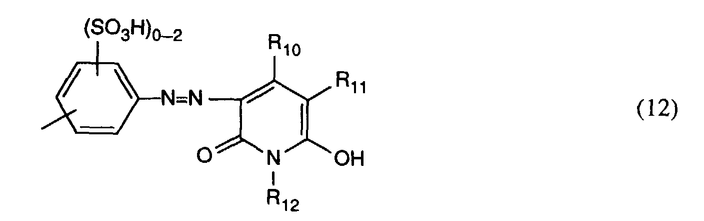 worin R₁₂ und R₁₀ unabhängig voneinander Wasserstoff, C₁-C₄-Alkyl oder Phenyl, und R₁₁ Wasserstoff, Cyano, Carbamoyl oder Sulfomethyl ist. 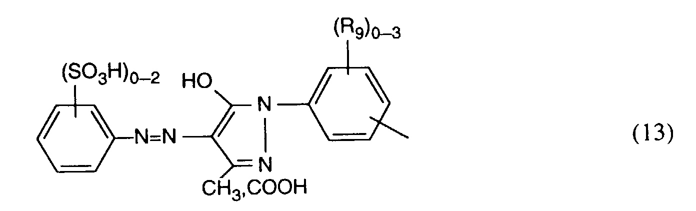 worin R₉ für 0 bis 3 Substituenten aus der Gruppe C₁-C₄-Alkyl, C₁-C₄-Alkoxy, Halogen, Carboxy und Sulfo steht. 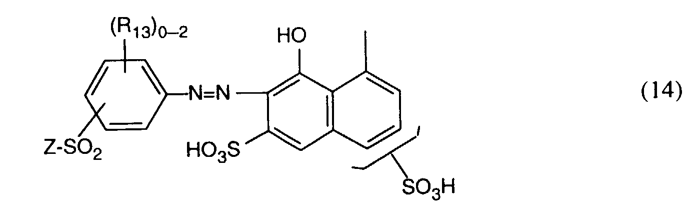 worin R₁₃ für 0 bis 2 Substituenten aus der Gruppe C₁-C₄-Alkyl, C₁-C₄-Alkoxy, Halogen, Carboxy und Sulfo steht; und Z β-Sulfatoäthyl, β-Thiosulfatoäthyl, β-Phosphatoäthyl, β-Acyloxyäthyl, β-Halogenäthyl oder Vinyl ist. 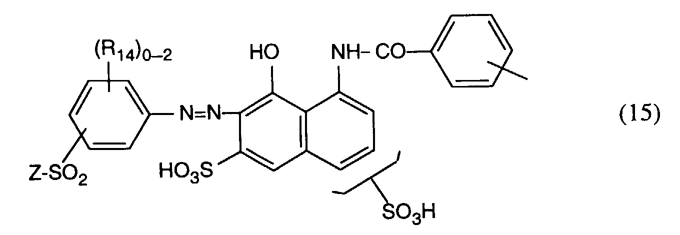 worin R₁₄ für 0 bis 2 Substituenten aus der Gruppe C₁-C₄-Alkyl, C₁-C₄-Alkoxy, Halogen, Carboxy und Sulfo steht; und Z β-Sulfatoäthyl, β-Thiosulfatoäthyl, β-Phosphatoäthyl, β-Acyloxyäthyl, β-Halogenäthyl oder Vinyl ist.

Besonders wichtig sind ausserdem Schwermetallkomplexe von Reaktivfarbstoffen der Formel (1); als komplexbildende Schwermetalle kommen vor allem Kupfer, Nickel, Kobalt oder Chrom in Betracht. Bevorzugt sind Kupferkomplexazofarbstoffe, insbesondere solche der Formeln (3) bis (13), die das Kupferatom über ein Sauerstoffatom je in ortho-Position zur Azobrücke gebunden enthalten.

Beispiele für Azofarbstoffe, die sich als Metallkomplexe eignen, sind: 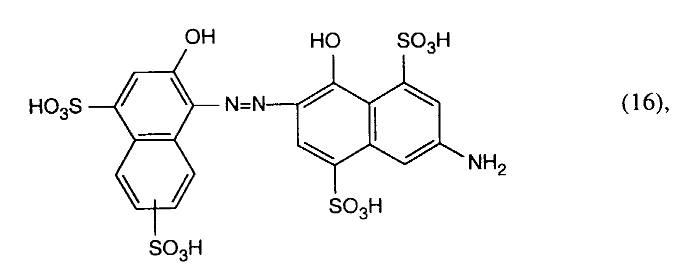 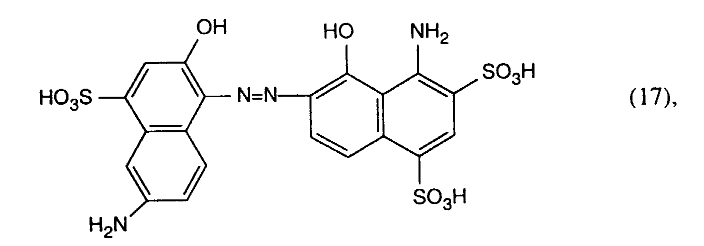 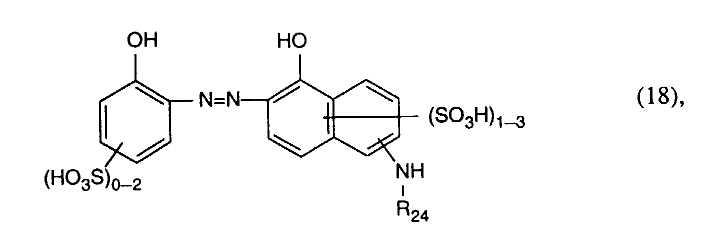 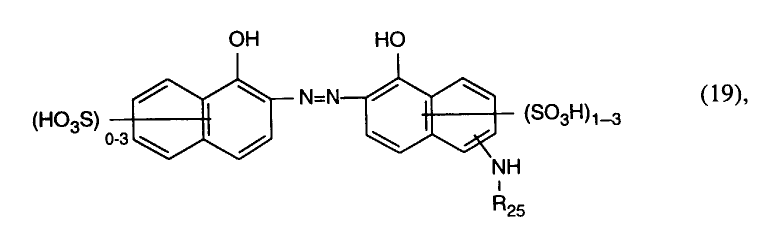 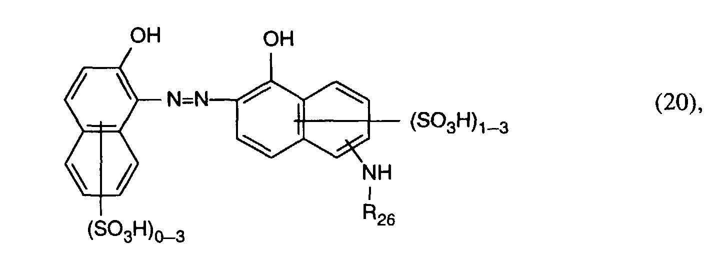 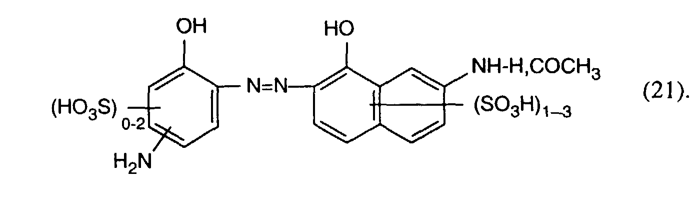 Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

Bevorzugt sind Kupferkomplexe wie z.B. 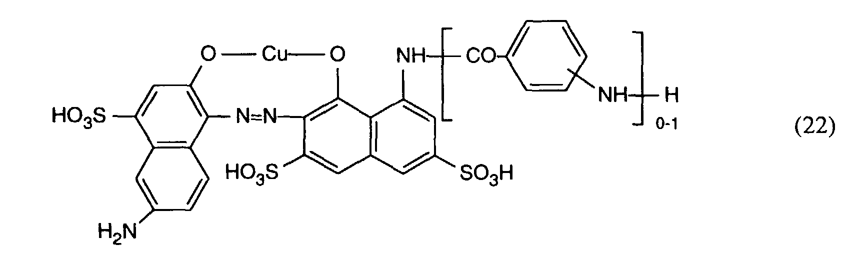 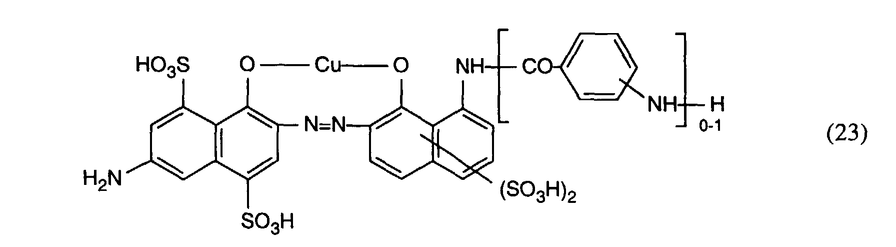 In den oben aufgeführten Formeln bedeuten die Reste R₂₄ bis R₂₆ Wasserstoff oder C₁-C₄-Alkyl. Vorzugsweise bedeuten die Reste R₂₄ bis R₂₆ Wasserstoff, Methyl oder Aethyl. Die aromatischen Ringe in den obigen Farbstoffen können weitersubstituiert sein die Benzolringe vor allem durch Methyl, Aethyl, Methoxy, Aethoxy, Methylsulfonyl, Aethylsulfonyl, Carboxy, Acetylamino oder Chlor, und die Naphthalinringe insbesondere durch Methoxy, Carboxy, Acetylamino, Nitro oder Chlor. Vorzugsweise sind die Benzolringe nicht weitersubstituiert.

Die Reaktivfarbstoffe der Formeln (1) und (2) sind an sich bekannt oder können hergestellt werden, indem man ein oder zwei Aequivalente eines organischen Farbstoff der Formel 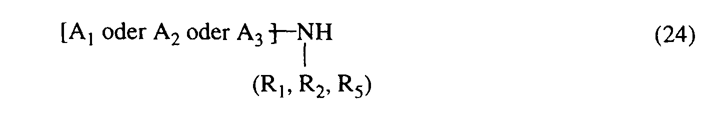 oder ein Farbstoffvorprodukt, mindestens ein Aequivalent eines s-Triazins, mindestens ein Aequivalent eines Diamins der Formel 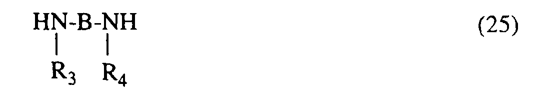 oder ein Aequivalent eines Amins der Formel 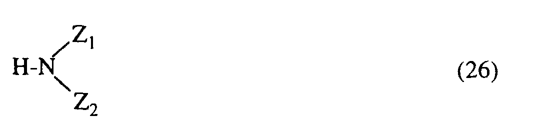 in beliebiger Reihenfolge miteinander umsetzt, wobei A₁, A₂, A₃, R₁, R₂, R₃, R₄, R₅, B, Z₁ und Z₂ die unter den Formeln (1) und (2) angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (25) dem Triazin und dem Farbstoff der Formel (24) oder einem Vorprodukt zweckmässigerweise zuerst ausgeführt wird, die des Triazins mit der Verbindung der Formel (25) oder mit dem Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Im folgenden sollen mögliche Ausgangsstoffe, die zur Herstellung der Reaktivfarbstoffe der Formeln (1) und (2) verwendet werden können, einzeln genannt werden.

### Farbstoffe der Formel (24)

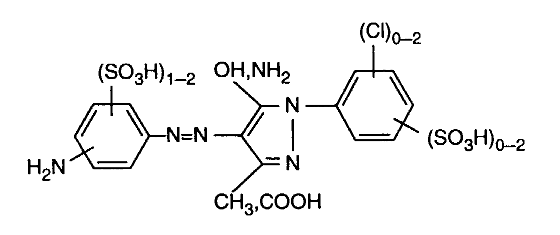

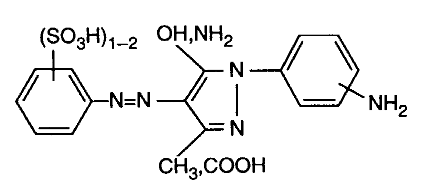

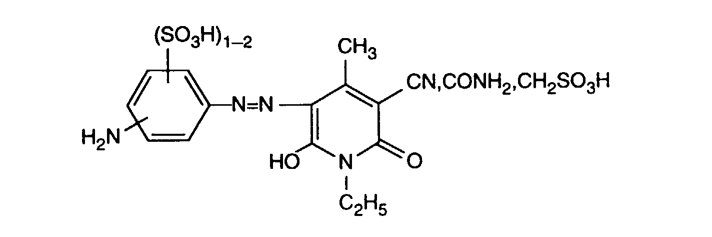

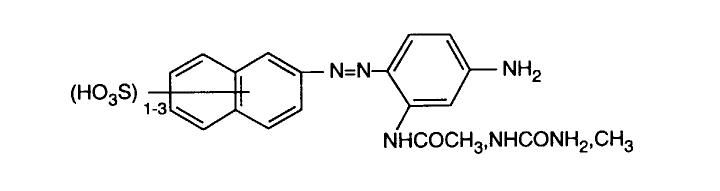

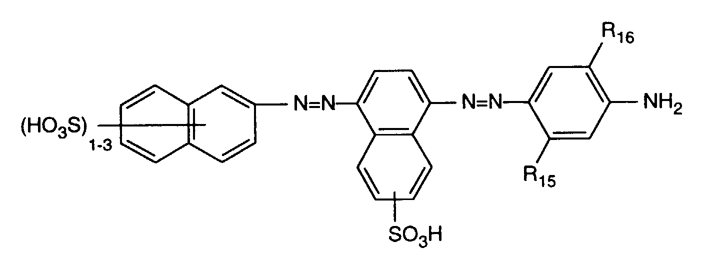

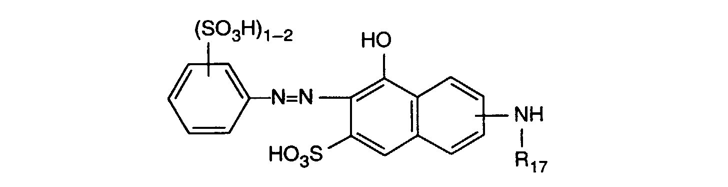

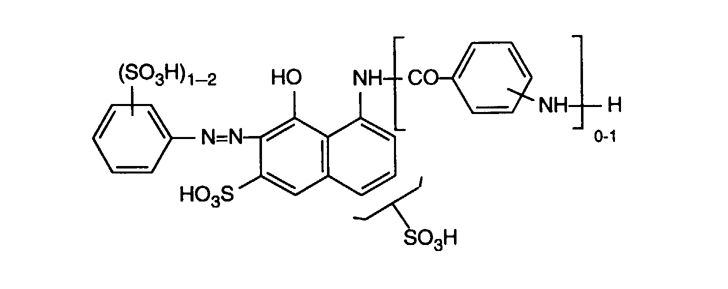

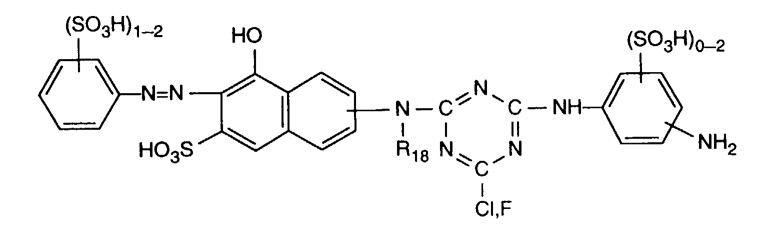

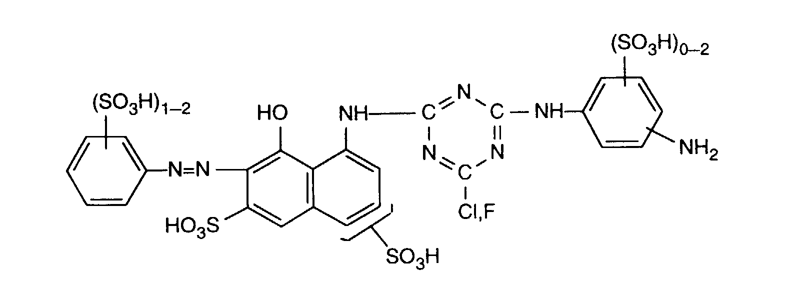

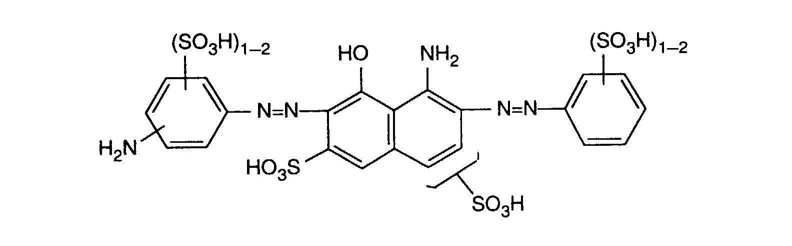

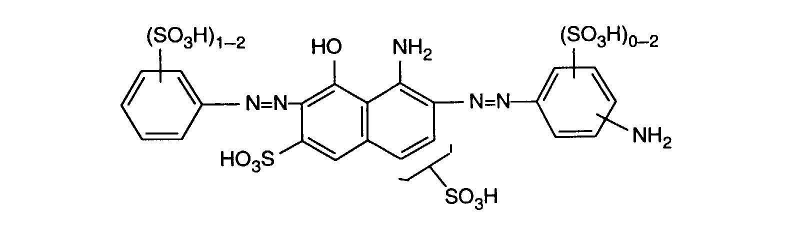

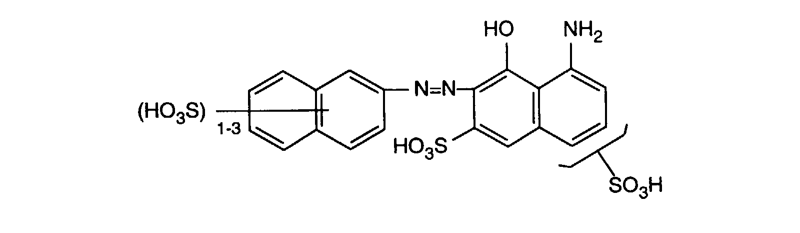

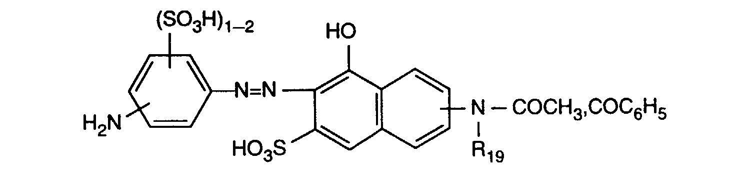

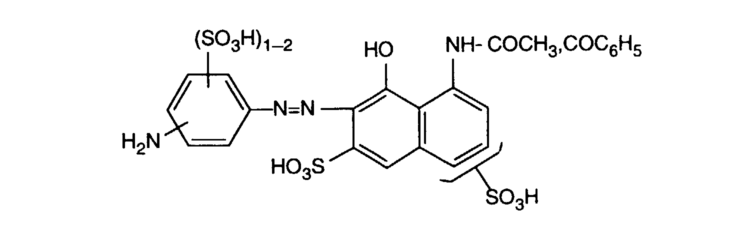

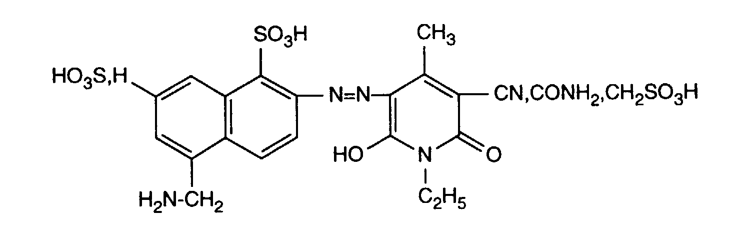

Metallkomplexe von Farbstoffen der Formeln:

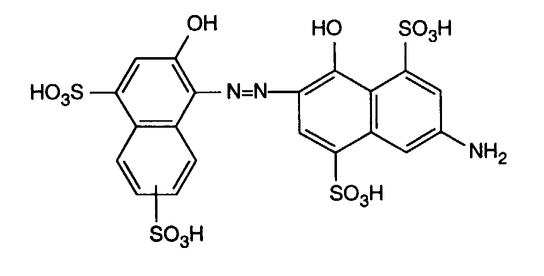

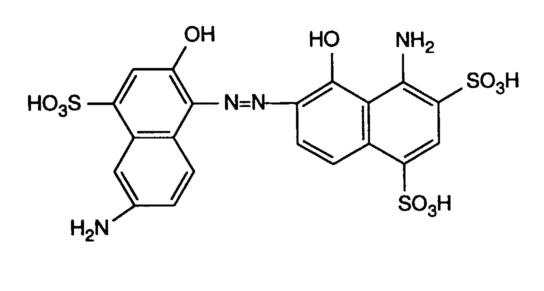

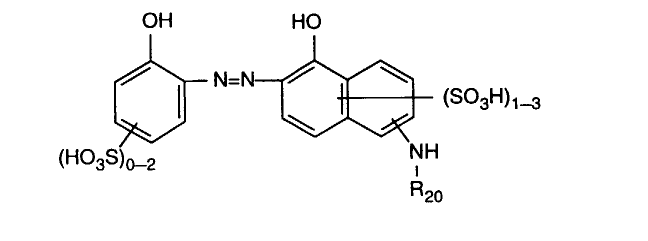

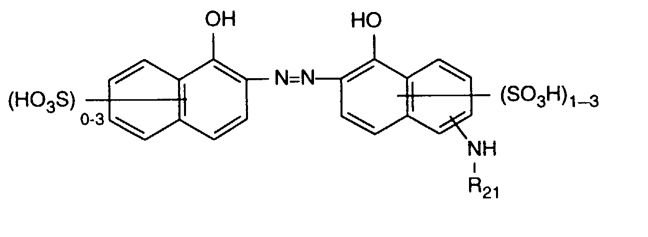

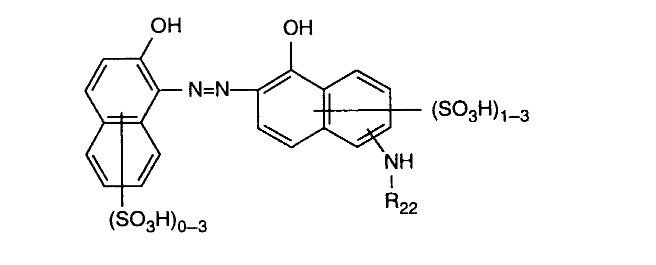

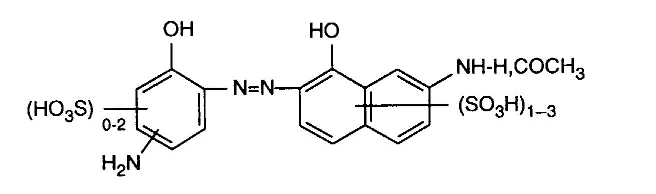

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

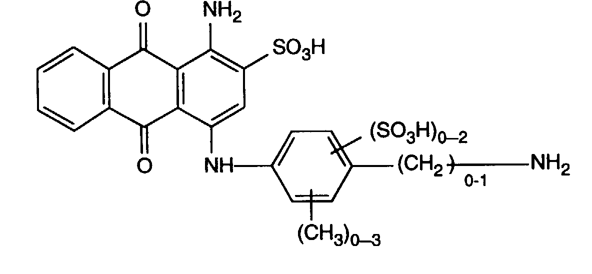

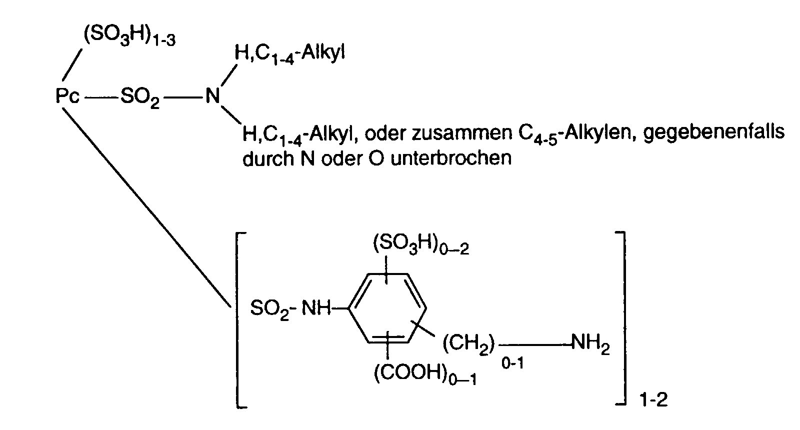

In dieser Formel steht Pc für den Cu- oder Ni-Phthalocyaninrest, die Gesamtzahl der Substituenten am Pc-Gerüst ist 4.

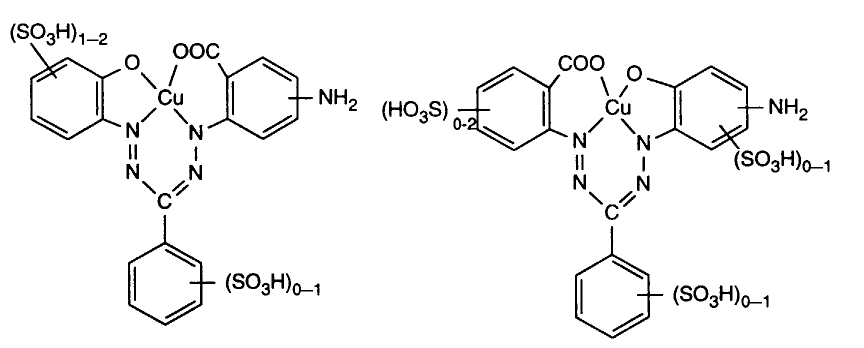

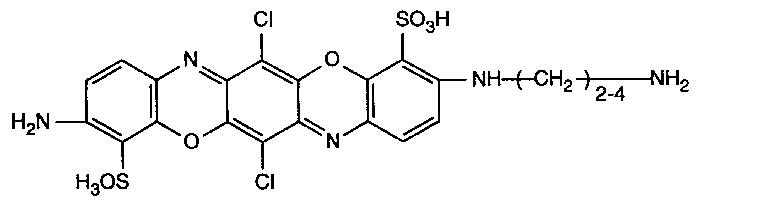

In den oben aufgeführten Formeln bedeuten die Reste R₁₇ bis R₂₂ Wasserstoff oder C₁-C₄-Alkyl, und die Reste R₁₅ und R₁₆ Wasserstoff, C₁-C₄-Alkyl, C₁-C₄-Alkoxy, C₁-C₄-Alkanoylamino, Ureido oder Halogen, wobei die Reste R₁₅ und R₁₆, die zu ein und derselben Formel gehören, voneinander unabhängig sind. Vorzugsweise bedeuten die Reste R₁₇ bis R₂₂ Wasserstoff, Methyl oder Aethyl, und die Reste R₁₅ und R₁₆ Wasserstoff, Methyl, Aethyl, Methoxy, Aethoxy, Acetylamino, Ureido oder Chlor. Die aromatischen Ringe in den obigen Farbstoffen können weitersubstituiert sein, die Benzolringe vor allem durch Methyl, Aethyl, Methoxy, Aethoxy, Methylsulfonyl, Aethylsulfonyl, Carboxy, Acetylamino oder Chlor, und die Naphthalinringe insbesondere durch Methoxy, Carboxy, Acetylamino, Nitro oder Chlor; gleiches gilt für die Anthrachinone, Dioxazine usw. Vorzugsweise sind die Benzolringe nicht weitersubstituiert.

### Als Triazine seien genannt:

2,4,6-Trifluor-s-triazin (Cyanurfluorid), 2,4,6-Trichlor-s-triazin (Cyanurchlorid), 2,4,6-Tribrom-s-triazin (Cyanurbromid), 2,4,6-Trisulfo-s-triazin.

### Diamine der Formel (25)

1,2-Diaminoethan, 1,3-Diaminopropan.

### Amine der Formel (26)

Ammoniak, Methylamin, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Aminoäthansulfonsäure, β-(Acetylamino)äthylamin, β-Sulfatoäthylamin, Benzylamin, Phenäthylamin, Cyclohexylamin, N-Propylaminobenzol, N-Isopropylaminobenzol, N-Butylaminobenzol, N-Isobutylaminobenzol, N-sek.-Butylaminobenzol, N-Hexylaminobenzol, N-β-Hydroxyäthylaminobenzol, N-β-Chloräthylaminobenzol, N-β-Cyanäthylaminobenzol, N-β-Sulfoäthylaminobenzol, 1-(N-Aethylamino)-2-3- oder -4-methylbenzol, 1-(N-Aethylamino)-2-, -3- oder -4-äthylbenzol, 1-(N-Aethylamino)-2-, -3- oder -4-chlorbenzol, 1-N-Aethylaminobenzol-3- oder 4-sulfonsäure, 1-(N-Aethylamino)-4-butylbenzol, 1-(N-Aethylamino)-4-hexylbenzol, 1-(N-Aethylamino)4-octylbenzol, 1-(N-Aethylamino)-4-vinylbenzol, 1-N-n-Butylamino-3-methylbenzol, 1-(N-Aethylamino)-4-fluorbenzol, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Aethylanilin, 3- oder 4-Acetylaminoanilin, 2,5-Dimethoxyanilin, o-, m- und p-Anisidin, o-, m- und p-Phenetidin, 2-Methoxy-5-methylanilin, 2-Aethoxy-5-methoxyanilin, 4-Bromanilin, 3-Aminobenzamid, 4-Aminophenylsulfamid, 3-Trifluormethylanilin, 3- und 4-Aminophenylsulfamid, 3-Trifluormethylanilin, 3- und 4-Aminophenylharnstoff, 1-Naphthylamin, 2-Naphthylamin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methan-sulfonsäure, 2-Aminotoluol-4-sulfonsäure, 2-Aminotoluol-5-sulfonsäure, p-Aminosalicyclsäure, 1-Amino-4-carboxy-benzol-3-sulfonsäure, 1-Amino-2-carboxybenzol-5-sulfonsäure, 1-Amino-5-carboxy-benzol-2-sulfonsäure, 1-Naphthylamin-2-, -3-, -4-, -5-, -6-, -7- und -8-sulfonsäure, 2-Naphthylamino-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, 4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin, Piperazin.

Die erfindungsgemässe Farbstoffmischung kann durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen durch Zerstäubungstrocknung der wässrigen Farbstoffmischungen hergestellt werden.

Gegenstand der Erfindung ist ferner ein Verfahren zum Färben und Bedrucken von cellulosehaltigen Fasermaterialien mit Farbstoffmischungen, die Reaktivfarbstoffe der Formeln (1) und (2) enthalten. Als Fasermaterialien kommen beispielsweise die natürlichen Cellulosefasern, wie Baumwolle, Leinen und Hanf, sowie Zellstoff und regenerierte Cellulose in Betracht. Die Farbstoffmischungen sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffmischungen lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült. Zum Färben und Bedrucken werden die üblichen Färbe- bzw. Druckverfahren angewendet.

Die Farbstoffmischungen zeichnen sich durch ein gutes Fixiervermögen und ein sehr gutes Aufbauvermögen aus. Sie können nach dem Ausziehverfahren über einen sehr grossen Temperaturbereich eingesetzt werden und eignen sich deshalb auch sehr gut zum Färben von Baumwolle-Polyester-Mischgeweben nach den für solche Gewebe empfohlenen Bedingungen. Die Fixiergrade sind hoch, und die Differenz zwischen Ausziehgrad und Fixiergrad ist bemerkenswert klein, d.h. der Seifverlust sehr gering. Die Farbstoffmischungen der Reaktivfarbstoffe der Formeln (1) und (2) eignen sich auch zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffmischungen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit und eine sehr gute Chlorbadewasserechtheit.

Die Farbstoffe der Formeln (1) und (2) liegen entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht beschrieben, sie ergibt sich jedoch ohne weiteres aus der allgemeinen Beschreibung.

Beispiel 1: Zur Herstellung der Farbstoffmischungen, die einen Farbstoff der Formel 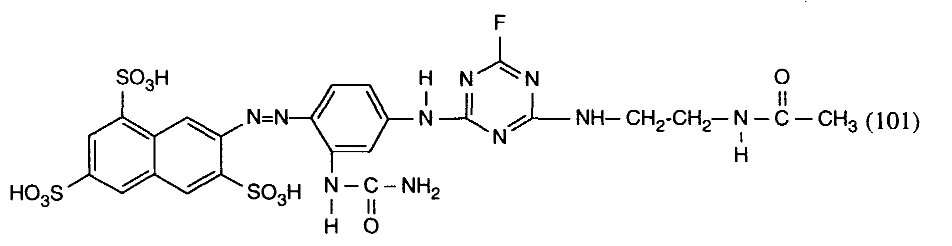 und einen Farbstoff der Formel (102) enthält, werden in einem Mixer 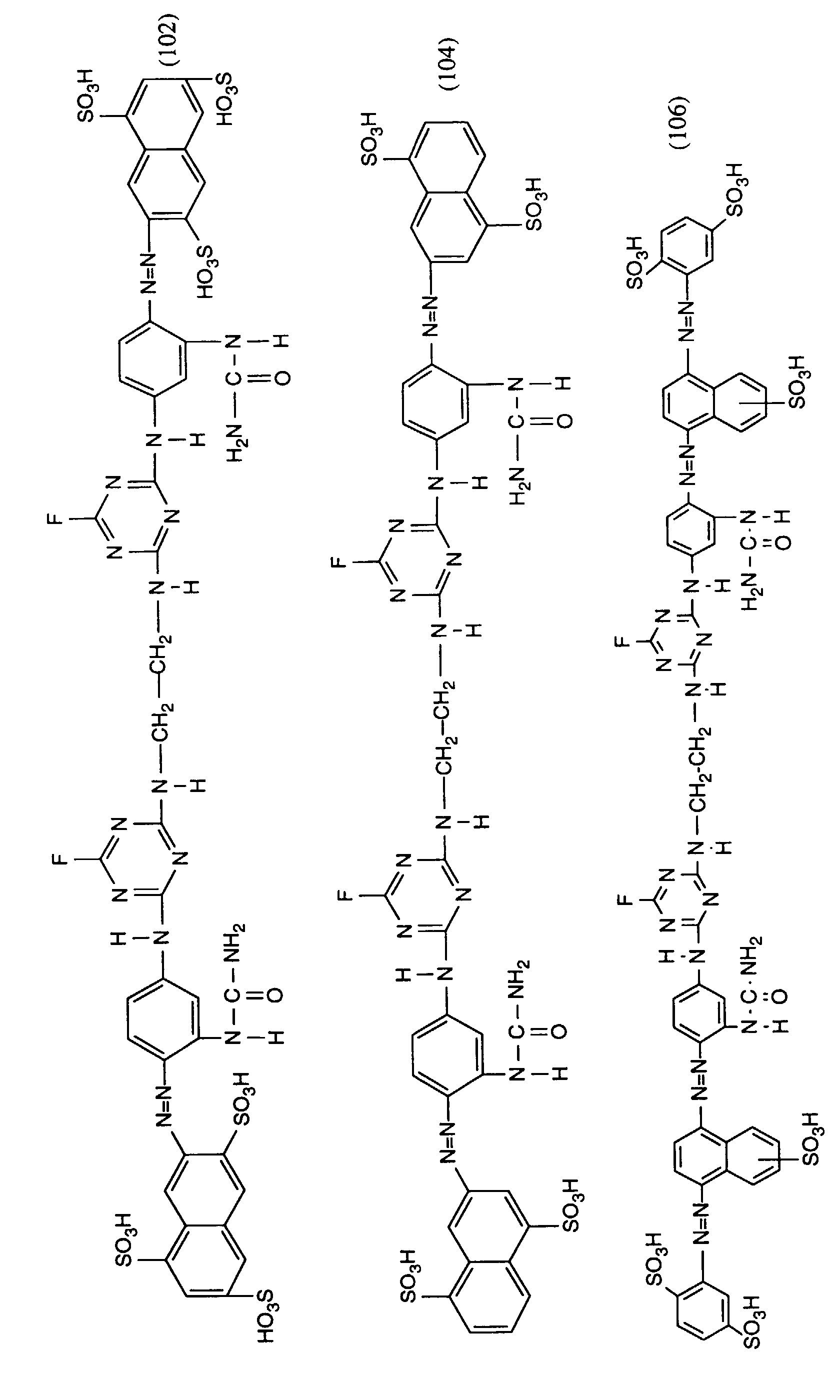
a₁) 40 Teile des Farbstoffs der Formel (101) und 60 Teile des Farbstoffs der Formel (102) homogen gemischt und ergeben 100 Teile der Mischung, die im folgenden als Farbstoffmischung A₁ bezeichnet wird;
a₂) 5 Teile des Farbstoffs der Formel (101) und 95 Teile des Farbstoffs der Formel (102) homogen gemischt und ergeben 100 Teile der Mischung, die im folgenden als Farbstoffmischung A₂ bezeichnet wird;
a₃) 10 Teile des Farbstoffs der Formel (101) und 90 Teile des Farbstoffs der Formel (102) homogen gemischt und ergeben 100 Teile der Mischung, die im folgenden als Farbstoffmischung A₃ bezeichnet wird;
   zur Herstellung der Farbstoffmischung, die den Farbstoff der Formel 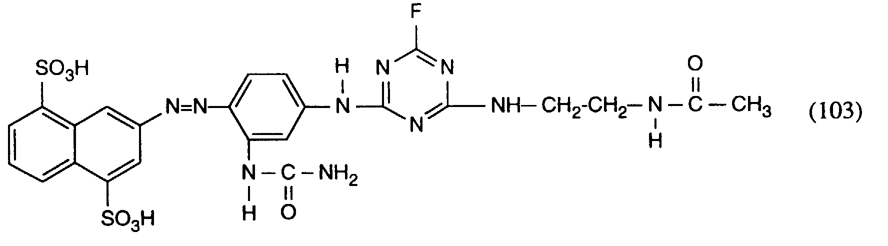 und den Farbstoff der Formel (104) enthält, werden in einem Mixer
b) 20 Teile des Farbstoffs der Formel (103) und 80 Teile des Farbstoffs der Formel (104) homogen gemischt;
   zur Herstellung der Farbstoffmischung, die den Farbstoff der Formel 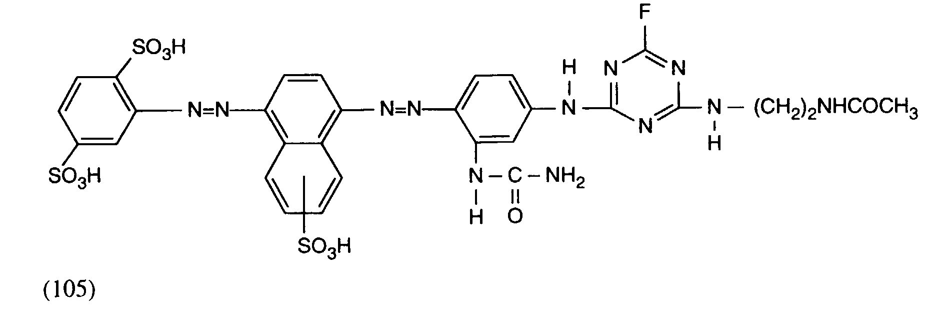 und den Farbstoff der Formel (106) enthält, werden in einem Mixer
c) 20 Teile des Farbstoffs der Formel (105) und 80 Teile des Farbstoffs der Formel (106) homogen gemischt;
   zur Herstellung der Farbstoffmischung, die den Farbstoff der Formel 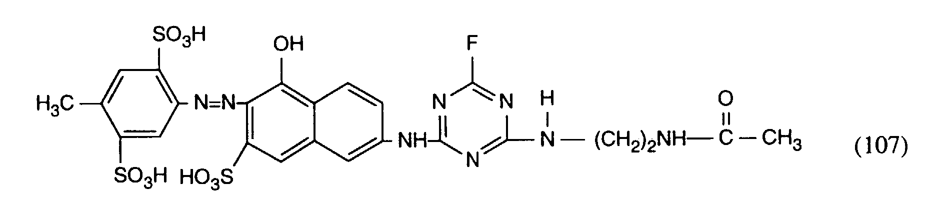 und den Farbstoff der Formel 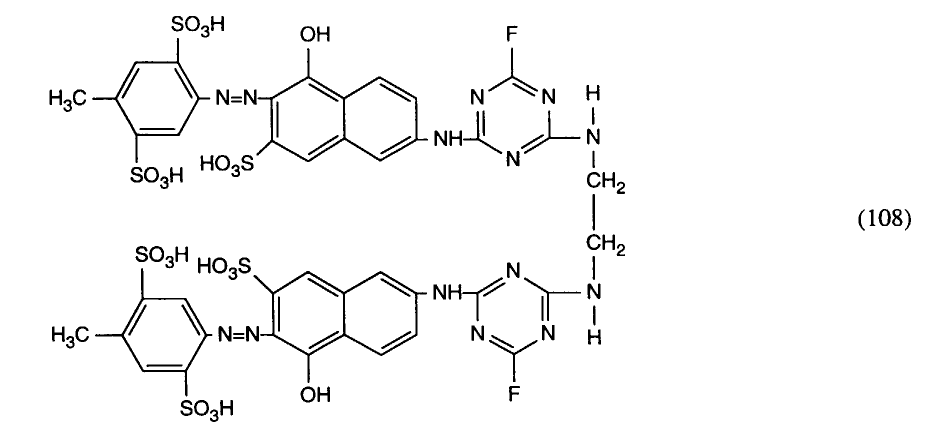 enthält, werden in einem Mixer
d) 20 Teile des Farbstoffs der Formel (107) und 80 Teile des Farbstoffs der Formel (108) homogen gemischt und ergeben 100 Teile der Mischung, die im folgenden als Farbstoffmischung D bezeichnet wird;
   zur Herstellung der Farbstoffmischung, die den Farbstoff der Formel 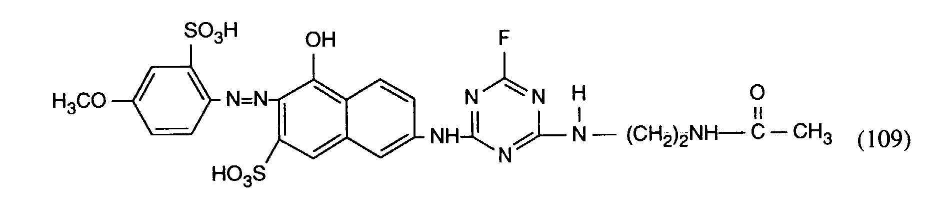 und den Farsbtoff der Formel 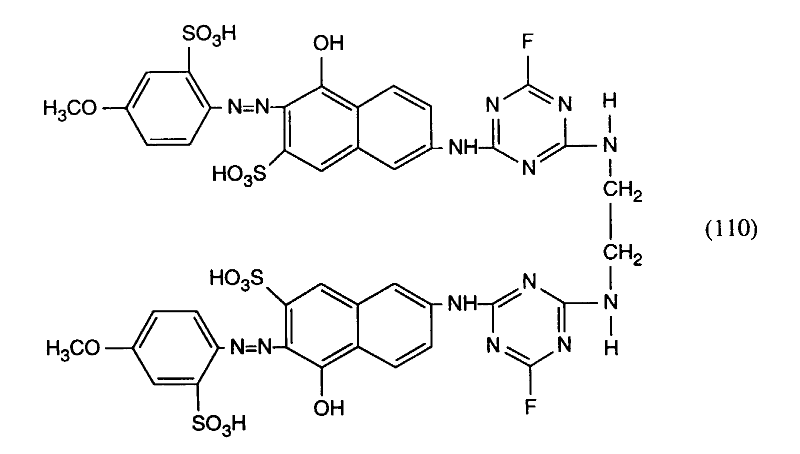 enthält, werden in einem Mixer
e) 20 Teile des Farbstoffs der Formel (109) und 80 Teile des Farbstoffs der Formel (110) homogen gemischt;
   zur Herstellung der Farbstoffmischung, die den Farbstoff der Formel 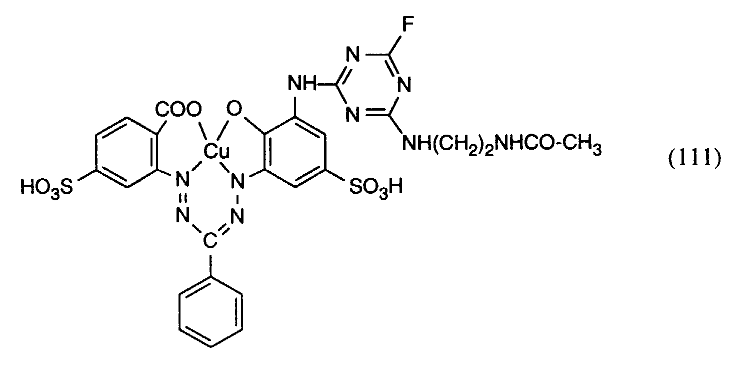 und den Farbstoff der Formel 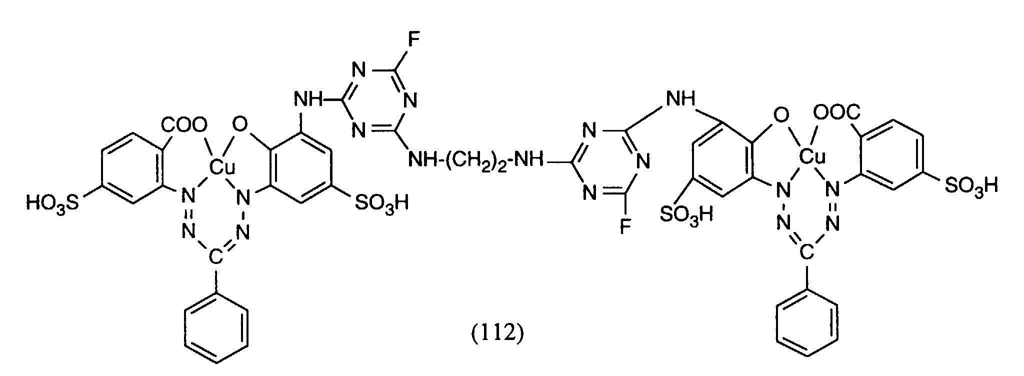 enthält, werden in einem Mixer
f) 30 Teile des Farbstoffs der Formel (111) und 70 Teile des Farbstoffs der Formel (112) homogen gemischt und ergeben 100 Teile der Mischung, die im folgenden als Farbstoffmischung F bezeichnet wird.

### Beispiel 2

27,3 Teile des Farbstoffes der Formel 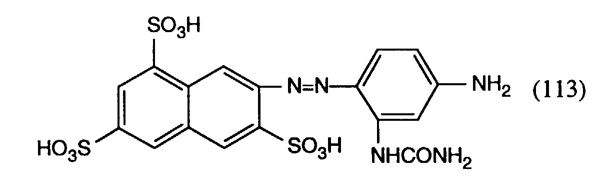 werden in 600 Vol.Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5° und einem pH-Wert von 5-7 mit 0,75 Teilen Aethylendiamin und 2,2 Teilen Morpholin. Der pH-Wert des Reaktionsgemisches wird nun durch Zufügen von Natriumcarbonat auf 7,5 und die Temperatur langsam auf 25° erhöht. Nach beendigter Kondensation wird eine Mischung der Farbstoffe der Formeln 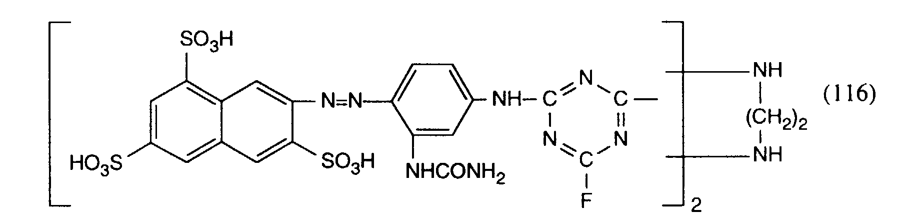 und 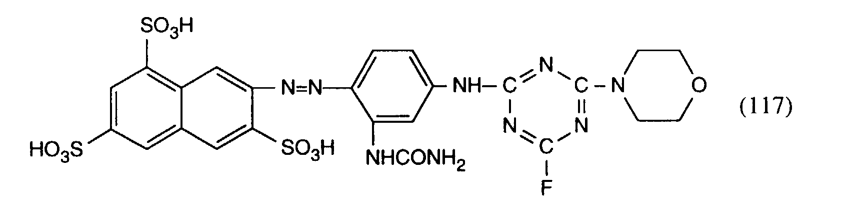 nach Zugabe von Puffersalzen mit Natriumchlorid gefällt, filtriert, gewaschen und getrocknet. Er stellt ein oranges Pulver dar und färbt Baumwolle in goldgelben Tönen.

Werden anstelle von 2,2 Teilen Morpholin 5,8 Teile Metanilsäure, 2,7 Teile o-Toluidin, 2,7 Teile N-Methylanilin oder 3,0 Teile N-Aethylanilin eingesetzt, so erhält man Mischungen des Farbstoffes der Formel 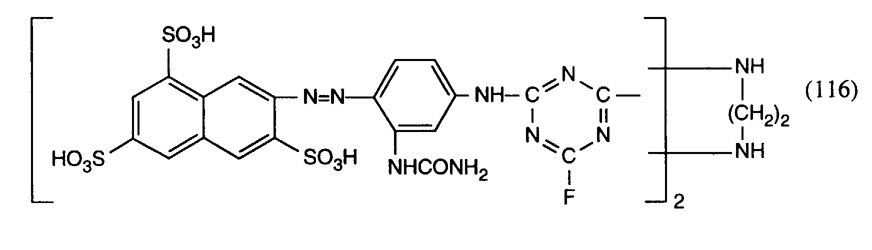 mit einem der Farbstoffe der folgenden Formeln 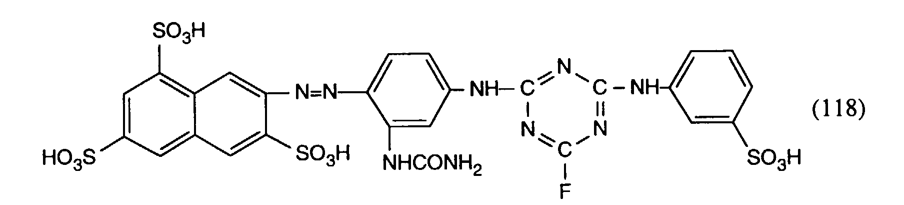 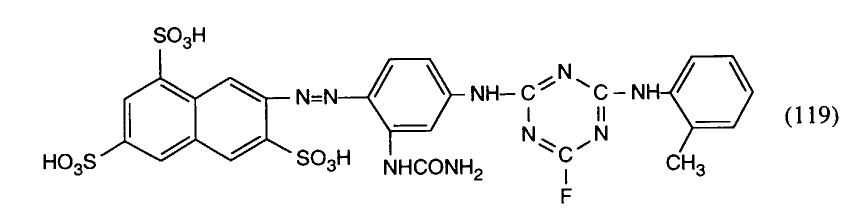 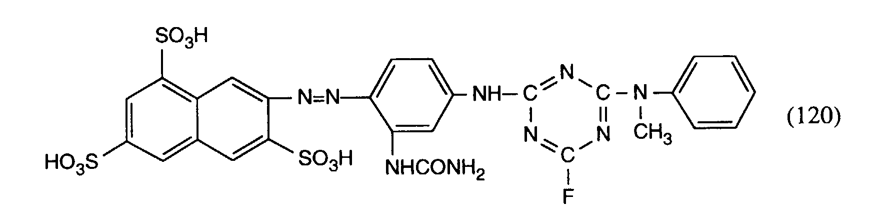 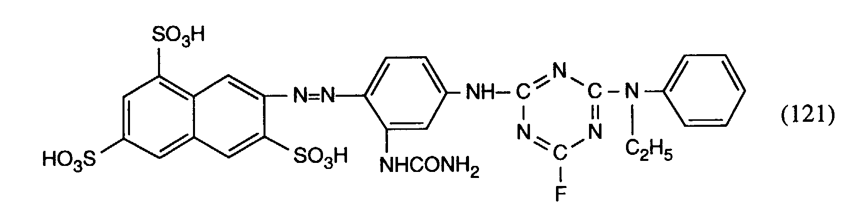 Je nach den Molverhältnissen der eingesetzten Amine bzw. Diamine werden Farbstoffmischungen mit unterschiedlichen Mischungsverhältnissen erhalten.

Anstelle von Aethylendiamin können z.B. die folgenden Diamine verwendet werden: 1,3-Propylendiamin, 1,2-Propylendiamin, n-Butylendiamin, 1-Methyl-n-propylendiamin, n-Hexylendiamin, 2-Aethyl-n-butylendiamin, 2-Hydroxy-n-propylendiamin, Piperazin.

Verwendet man anstelle des oben angegebenen Chromophors die in der folgenden Tabelle in Spalte I aufgeführten Chromophore und verfährt im übrigen wie in den Beispielen beschrieben, so erhält man weitere Farbstoffmischungen, die Baumwolle in den in Spalte II angegebenen Tönen färben.

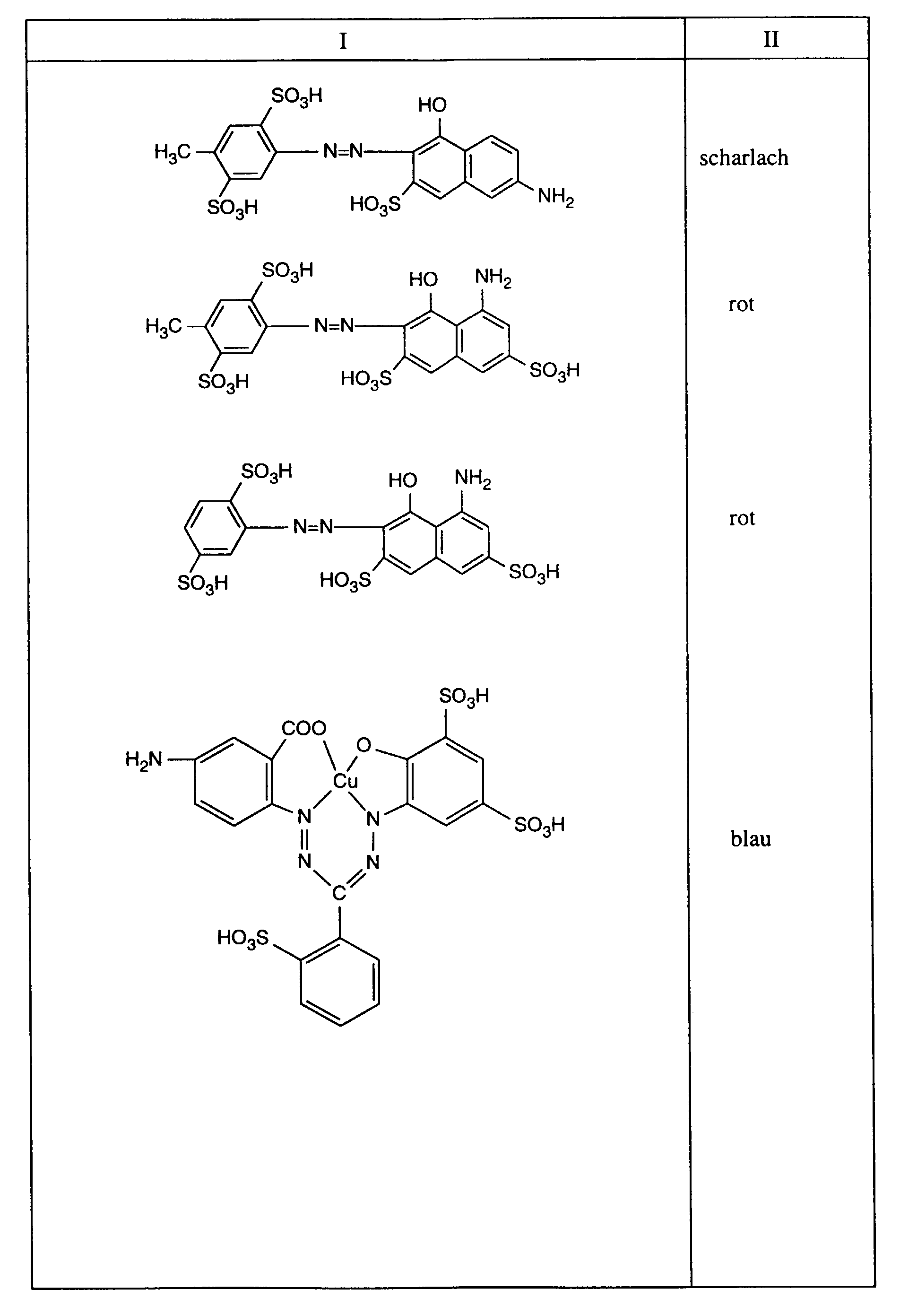

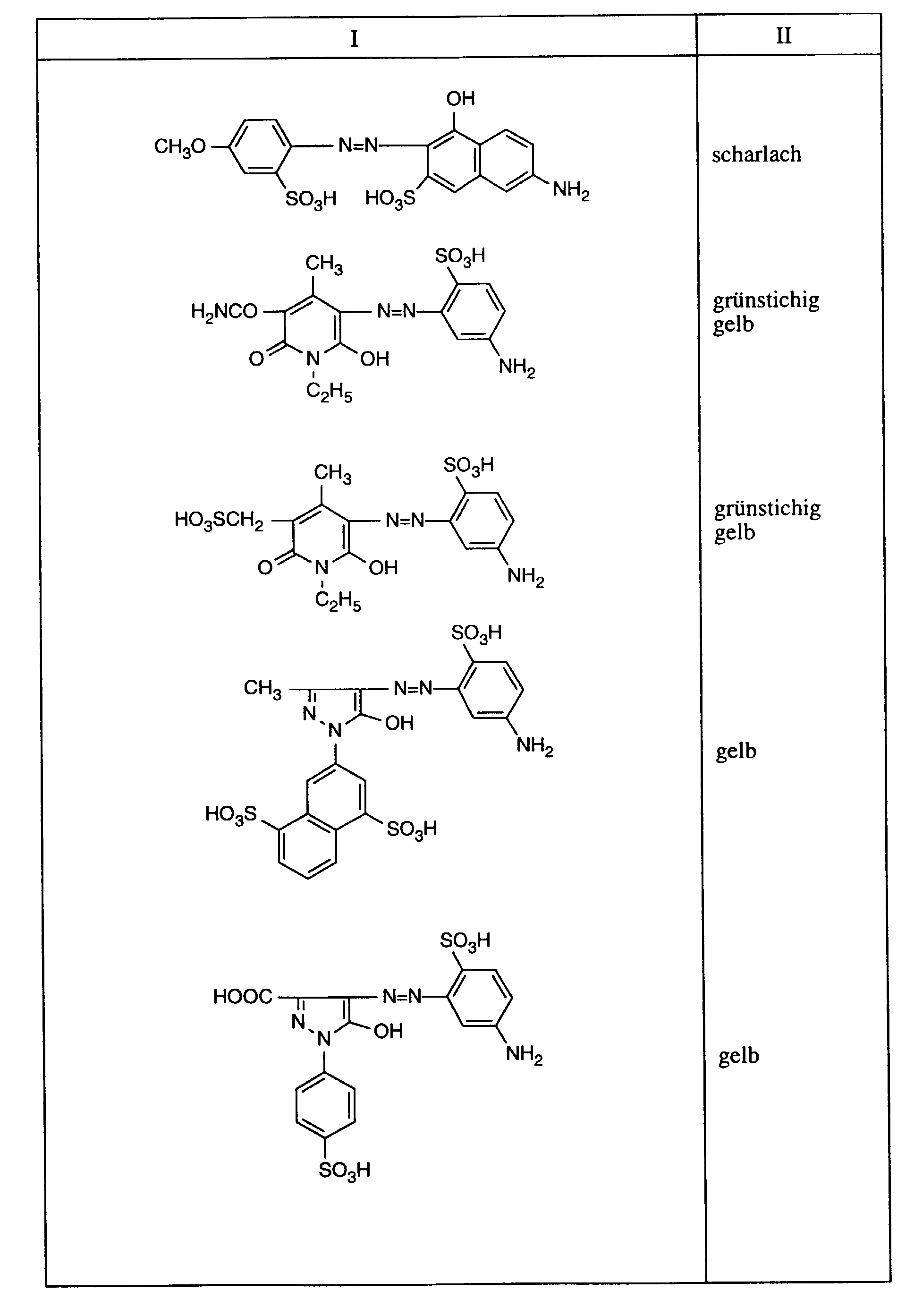

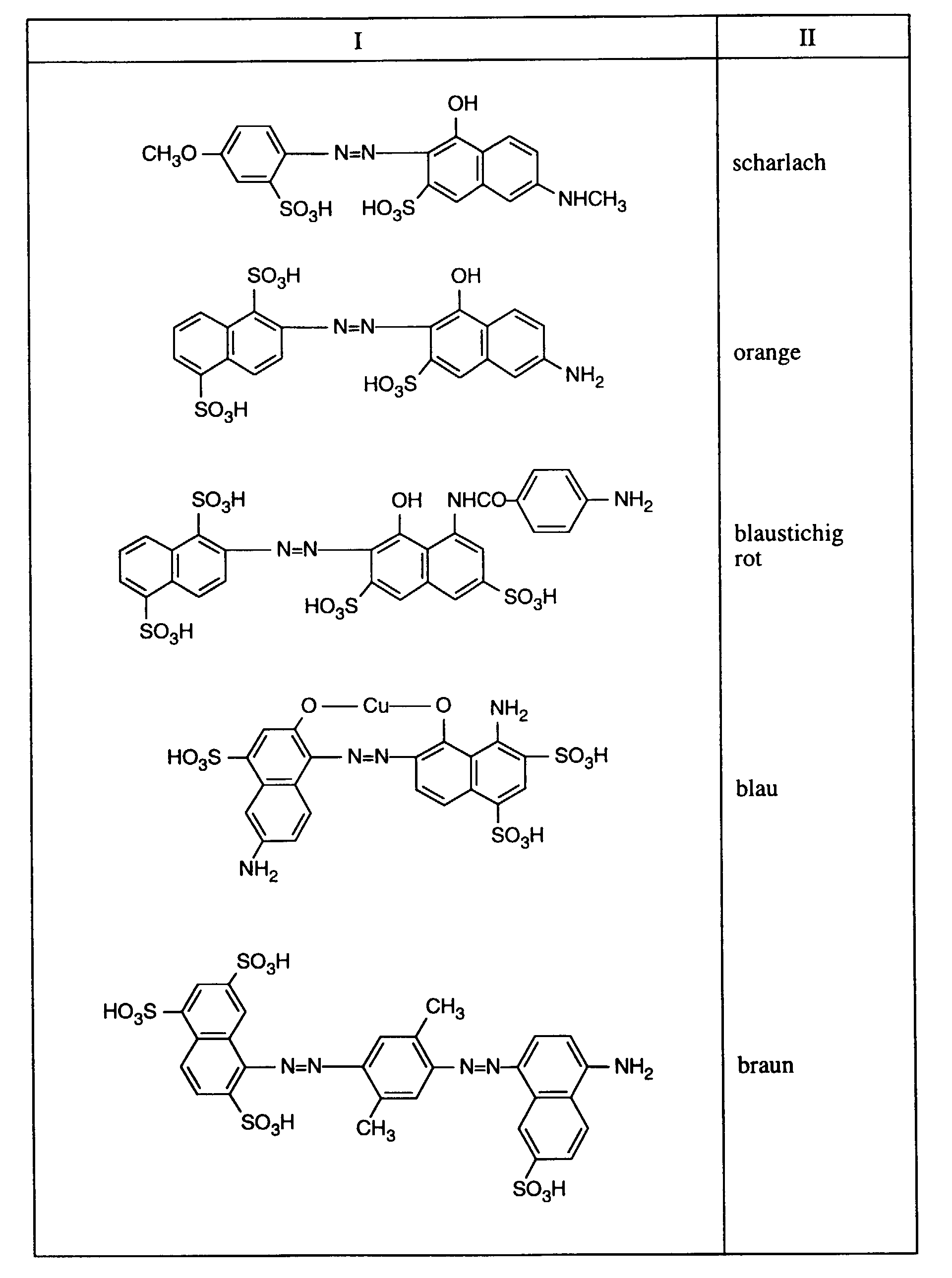

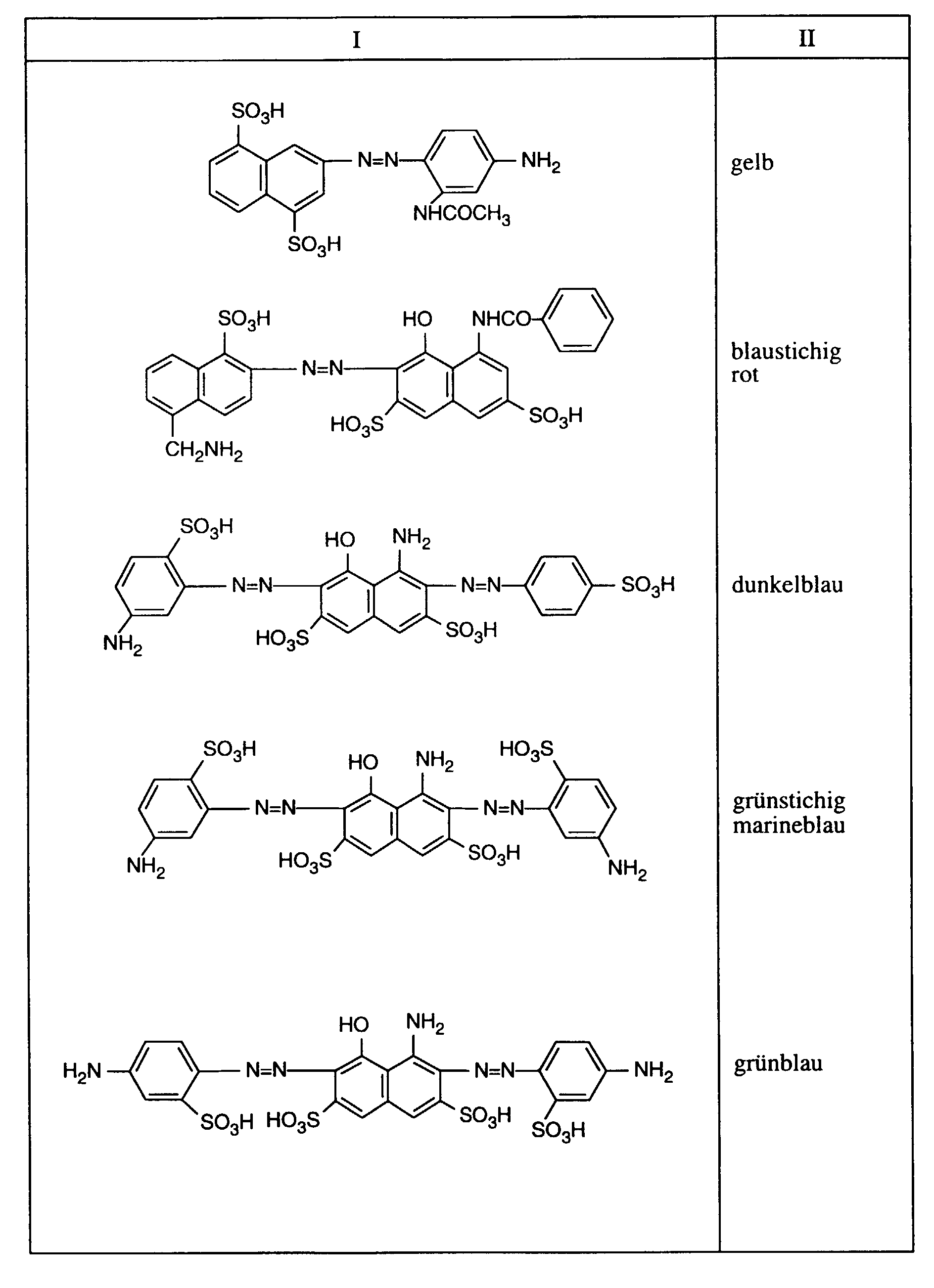

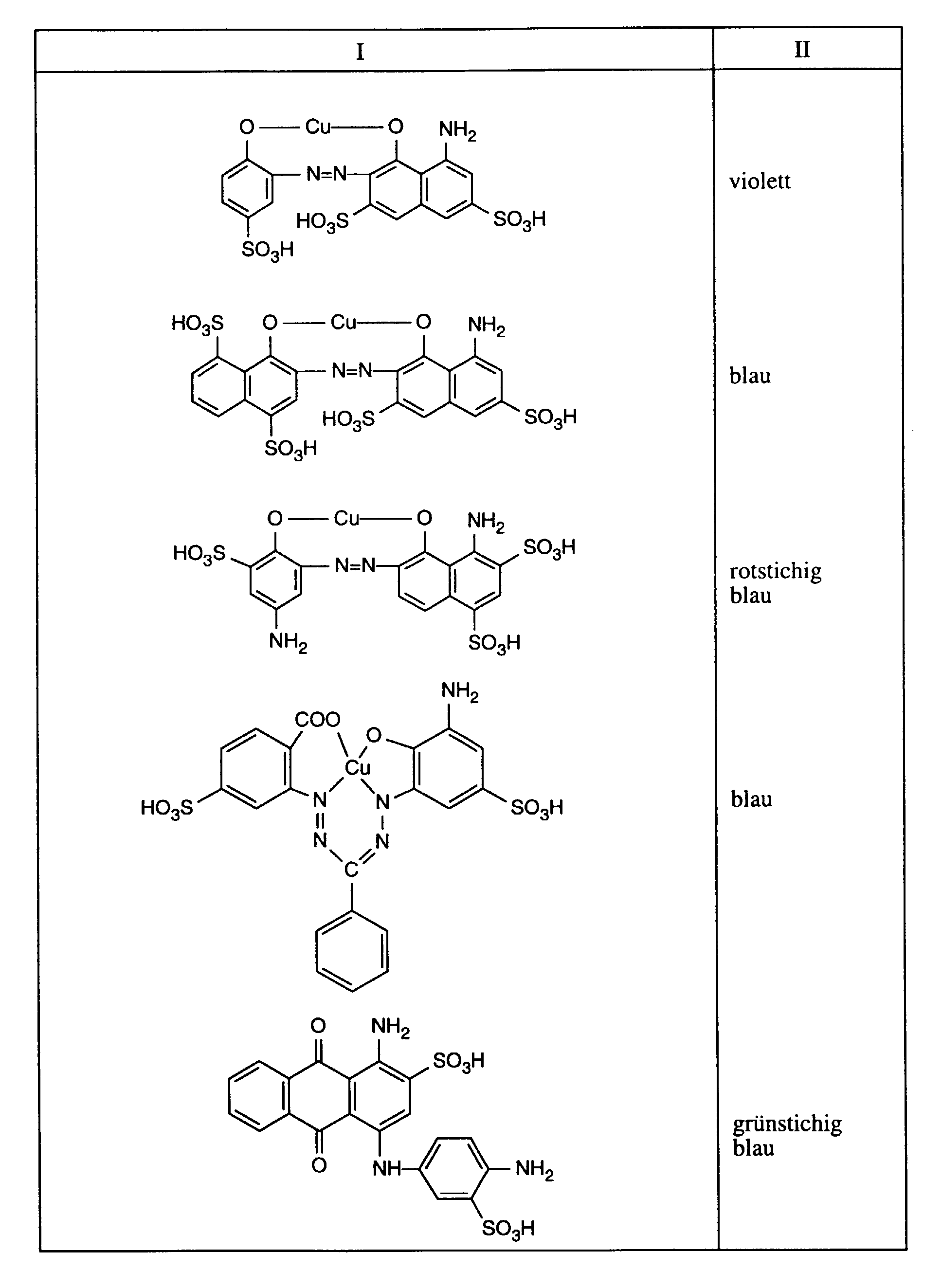

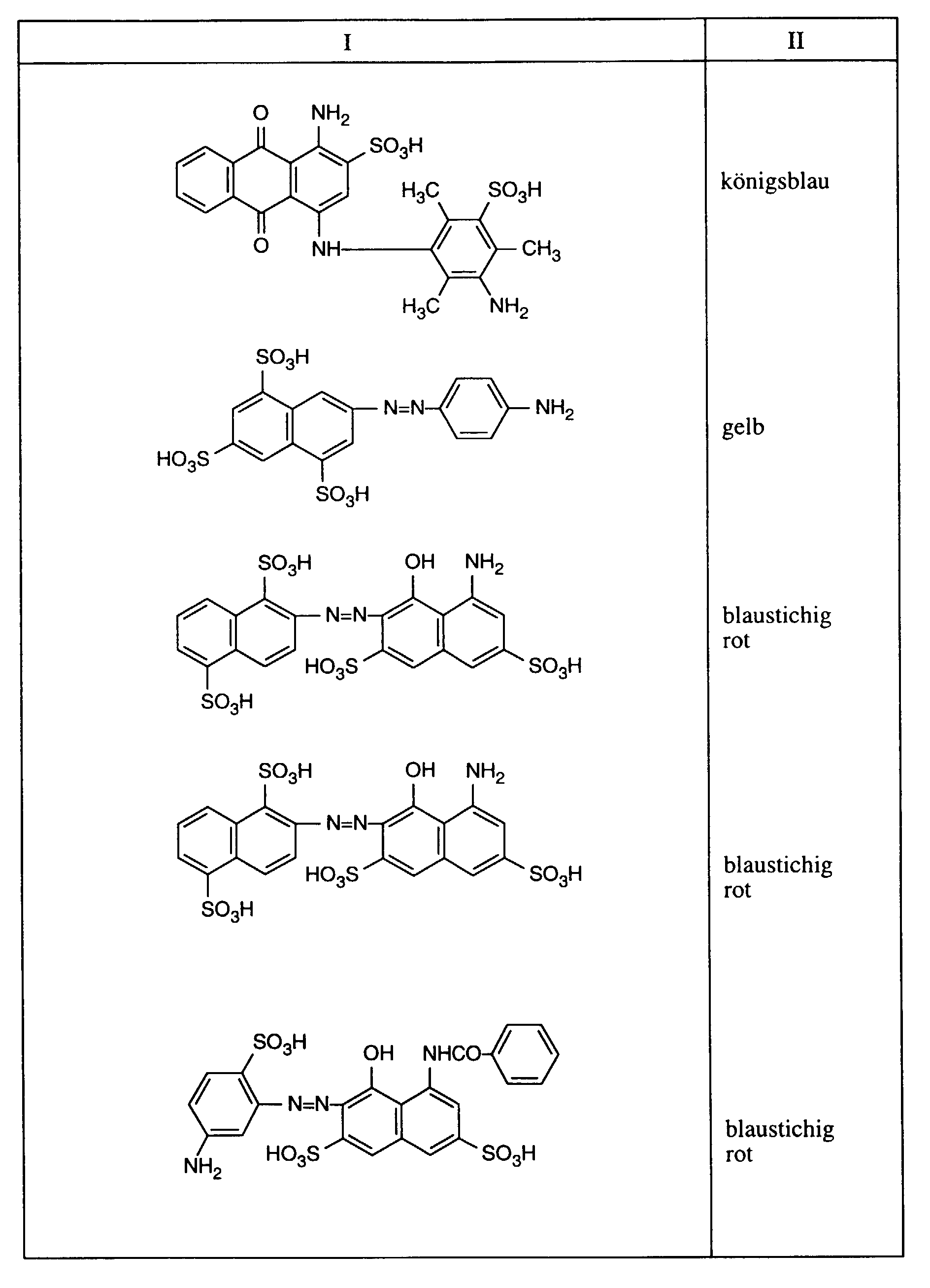

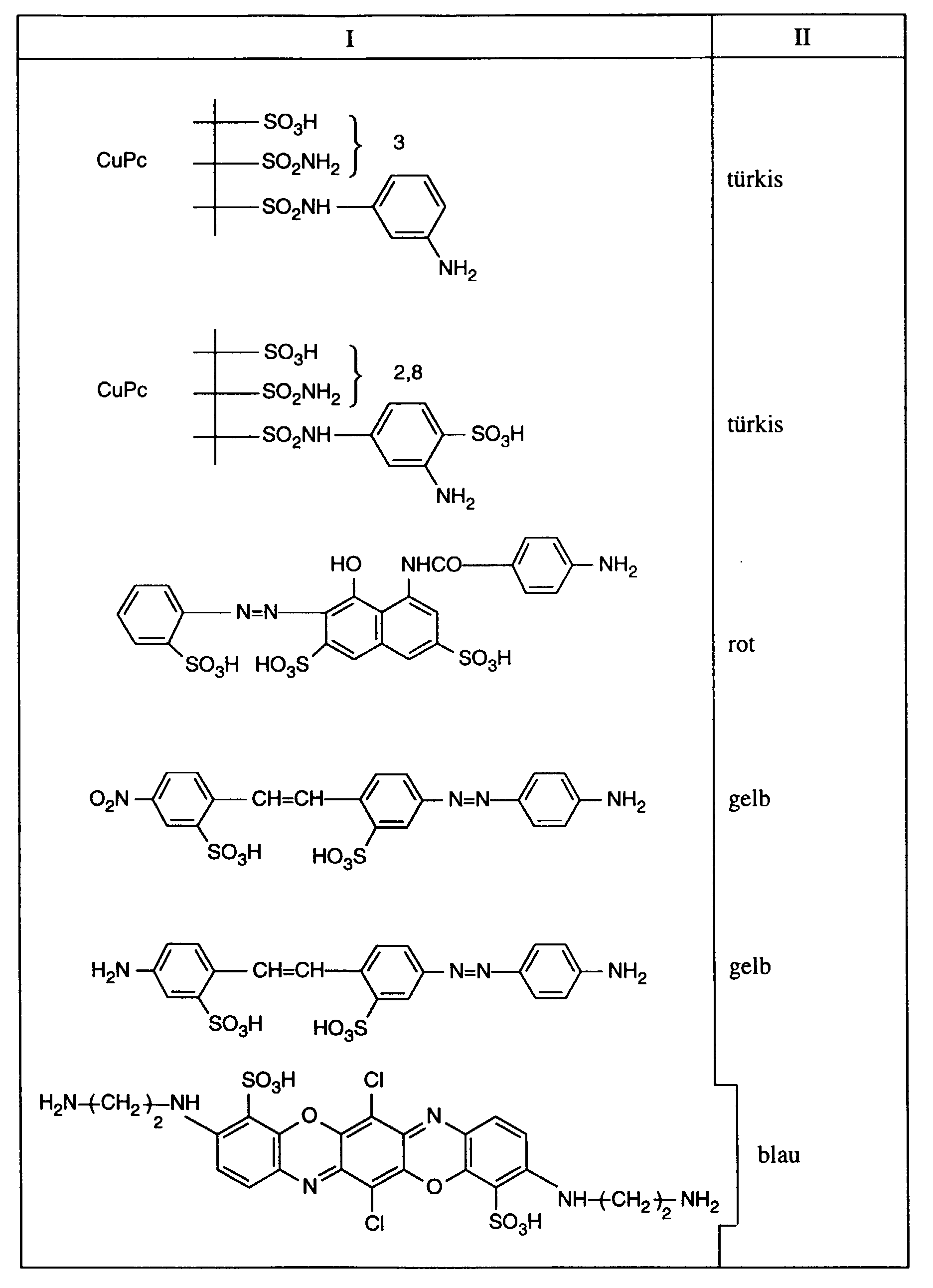

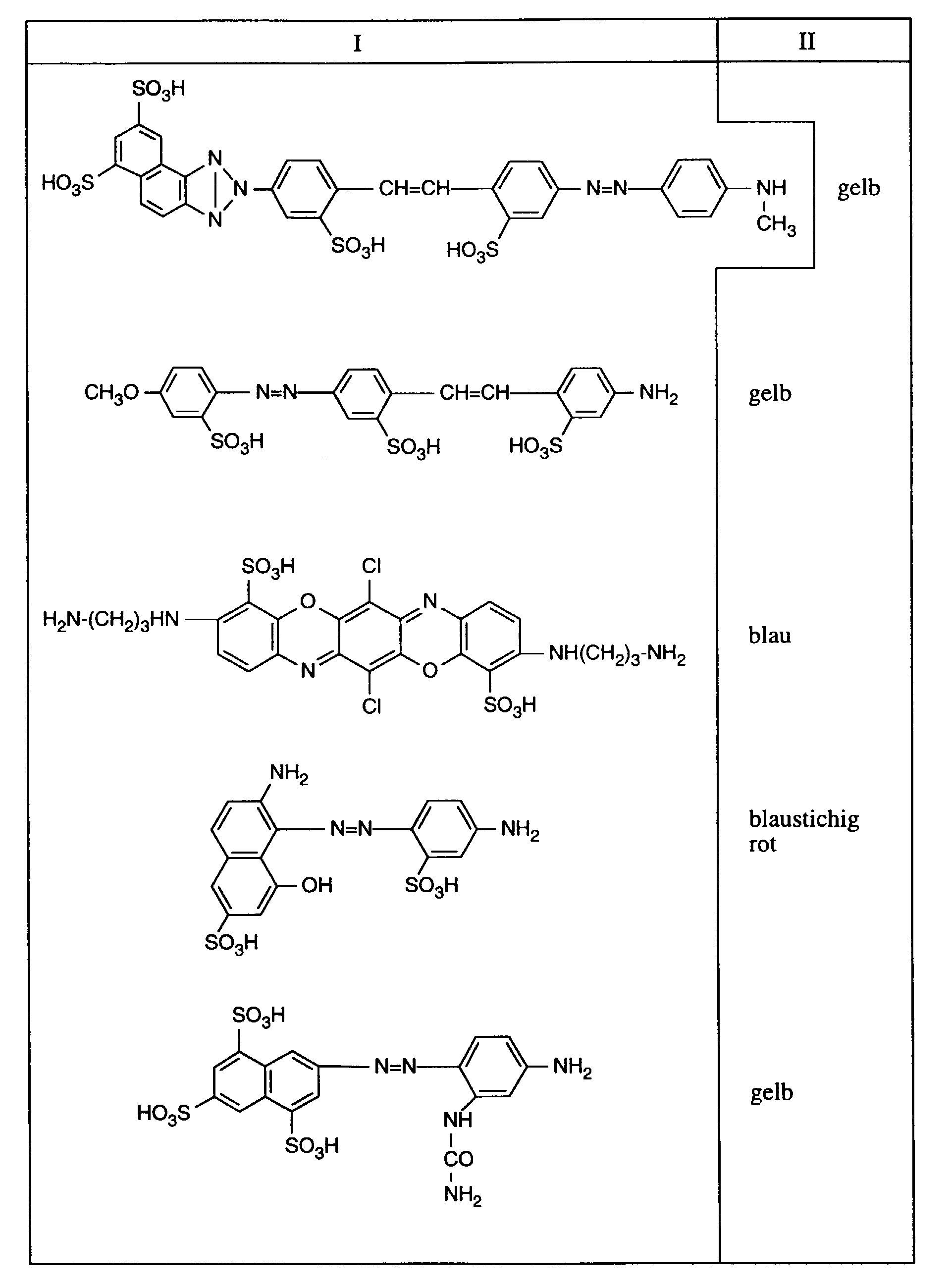

### Beispiel 3

27,3 Teile des Farbstoffes der Formel 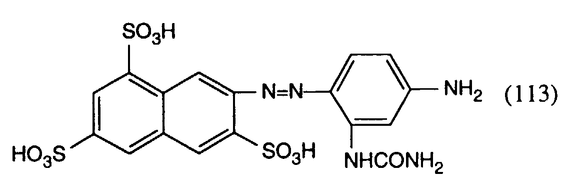 werden in 600 Vol.Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5° und einem pH-Wert von 5-7 mit 2 bis 2,5 Teilen Aethylendiamin. Der pH-Wert des Reaktionsgemisches wird nun durch Zufügen von Natriumcarbonat auf 7,5 und die Temperatur langsam auf 25° erhöht. Nach beendigter Kondensation wird mit 2 bis 5 Teilen Acetanhydrid bei pH 8-9 acyliert. Anschliessend wird eine Mischung der Farbstoffe der Formeln 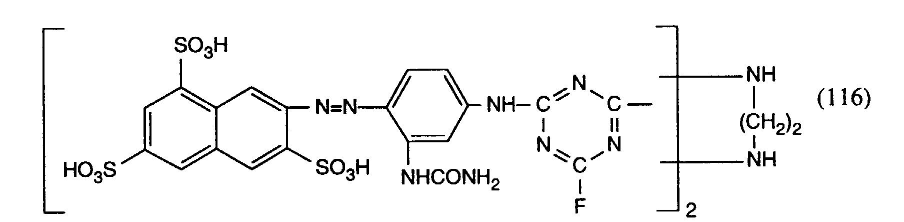 und 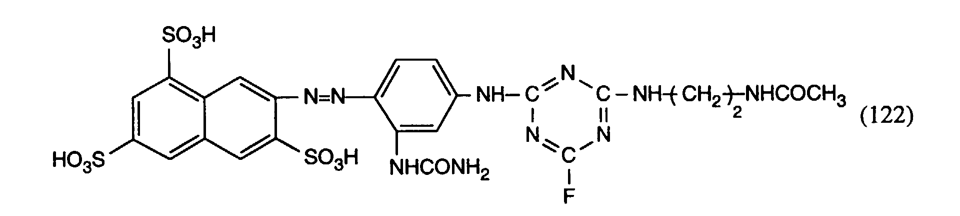 nach Zugabe von Puffersalzen mit Natriumchlorid gefällt, filtriert, gewaschen und getrocknet. Er stellt ein oranges Pulver dar und färbt Baumwolle in goldgelben Tönen.

Anstelle von Acetanhydrid können andere Acylierungsmittel, insbesondere aliphatische, aromatische oder heterocyclische Carbonsäurechloride, verwendet werden, beispielsweise Acetylchlorid, Propionylchlorid, Propionsäureanhydrid, 2-Propancarbonsäurechlorid, Carboxypropionylchlorid, Butyrylchlorid, Benzoylchlorid, 4-Methylbenzoylchlorid, Benzylcarbonsäurechlorid, 4-Sulfobenzylcarbonsäurechlorid und Pyridin-3-carbonsäurechlorid.

Anstelle des Aethylendiamins und des angegebenen Chromophors können auch die im Anschluss an Beispiel 2 aufgeführten Diamine bzw. Chromophore verwendet werden.

### Beispiel 4

2 Teile der gemäss Beispiele 1a₁, 1a₂ oder 1a₃ erhaltenen Farbstoffmischungen A₁, A₂ bzw. A₃ werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g wasserfreies Na₂CO₃ enthält, zugegeben. Die Temperatur des Färbebades wird weitere 45 Minuten bei 40°C gehalten. Danach wird die goldgelb gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten, insbesondere Nassechtheiten, aus. Die erhaltene Ware ist sehr farbstark.

### Beispiel 5

2 Teile der gemäss Beispiel 1d erhaltenen Farbstoffmischung D werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g wasserfreies Na₂CO₃ enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird die orange gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten, insbesondere Nassechtheiten, aus. Die erhaltene Ware ist sehr farbstark.

### Beispiel 6

8 Teile der gemäss Beispiel 1f erhaltenen Farbstoffmischung F werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird die blaugefärbte Ware gespült, während einer Viertelstunde mit einem nicht-ionogenen Waschmittel kochend geseift, nochmals gespült und getrocknet. Die erhaltene Ware zeichnet sich durch sehr gute Echtheiten, insbesondere Nassechtheiten, aus. Die erhaltene Ware ist sehr farbstark.

### Beispiel 7

4 Teile der gemäss Beispiele 1a₁, 1a₂ oder 1a₃ erhaltenen Farbstoffmischungen A₁, A₂ bzw. A₃ werden in 50 Teilen Wasser gelöst. Dazu gibt man 50 Teile einer Lösung, die pro Liter 5 g Natriumhydroxyd und 20 g wasserfreies Na₂CO₃ enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die goldgelb gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten, insbesondere Nassechtheiten, aus. Die erhaltene Ware ist sehr farbstark.

### Beispiel 8

6 Teile der gemäss Beispiel 1d erhaltenen Farbstoffmischung D werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die orange gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten, insbesondere Nassechtheiten, aus. Die erhaltene Ware ist sehr farbstark.

### Beispiel 9

2 Teile der gemäss Beispiel 1f erhaltenen Farbstoffmischung F werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die blaue Färbung während 30 Sekunden bei 100 bis 102°C, spült, seift während einer Viertelstunde in einer 0,3%igen kochenden Lösung eines nichtionogenen Waschmittels, spült und trocknet. Die erhaltene Ware zeichnet sich durch sehr gute Echtheiten, insbesondere Nassechtheiten, aus. Die erhaltene Ware ist sehr farbstark.

### Beispiel 10

3 Teile der gemäss Beispiele 1a₁, 1a₂ oder 1a₃ erhaltenen Farbstoffmischungen A₁, A₂ bzw. A₃ werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das goldgelb bedruckte Gewebe wird dann gespült, gegebenenfalls kochend geseift und nochmals gespült, und anschliessend getrocknet. Die erhaltene Ware zeichnet sich durch sehr gute Echtheiten, insbesondere Nassechtheiten, aus. Die erhaltene Ware ist sehr farbstark.

### Beispiel 11

5 Teile der gemäss Beispiel ld erhaltenen Farbstoffmischung D werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen orange bedruckten Stoff 8 Minuten bei 102°C in gesättigtem Dampf. Das bedruckte Gewebe wird dann gespült, gegebenenfalls kochend geseift und nochmals gespült, und anschliessend getrocknet. Die erhaltene Ware zeichnet sich durch sehr gute Echtheiten, insbesondere Nassechtheiten, aus. Die erhaltene Ware ist sehr farbstark.

## Patentansprüche (Patentansprüche für folgende(n) Vertragsstaat(en): BE, CH, DE, FR, GB, IT, LI)

1. Farbstoffmischungen, dadurch gekennzeichnet, dass sie Farbstoffe der Formeln 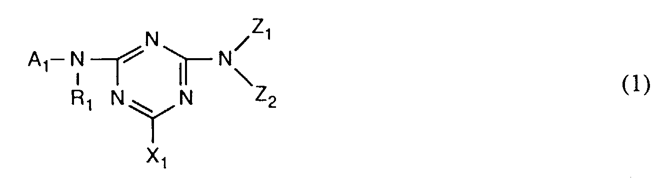 und 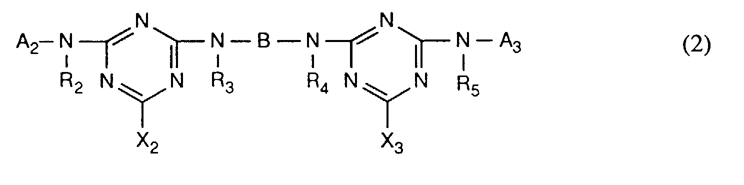 enthalten, worin A₁, A₂ und A₃ identisch sind und jeweils der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes, R₁, R_{2,} R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann, B ein aliphatisches Brückenglied, und Z₁ und Z₂ Wasserstoff oder ein aliphatischer, aromatischer oder heterocyclischer Rest ist, oder Z₁ und Z₂ bilden mit dem sie verbindenden Stickstoffatom einen fünf- bis siebengliedrigen Ring, der ausser C-Atomen weitere Heteroatome enthalten kann, und X₁, X₂ und X₃ unabhängig voneinander Fluor, Chlor, Brom, Sulfo oder Carboxypyridinium bedeuten.

2. Farbstoffmischungen gemäss Anspruch 1, dadurch gekennzeichnet, dass die Reste A₁, A₂, A₃, Z₁ und Z₂ unabhängig voneinander faserreaktive Reste enthalten.

3. Farbstoffmischungen gemäss einem der Ansprüche 1 und 2, dadurch gekennzeichnet, dass das Gewichtsverhältnis der Farbstoffe der Formeln (1):(2) 5:95 bis 95:5, insbesondere 30:70 bis 70:30, ist.

4. Farbstoffmischungen gemäss einem der Ansprüche 1 bis 3, dadurch gekennzeichnet, dass B unsubstituiertes oder durch Halogen, C₁-C₄-Alkyl, C₁-C₄-Alkoxy, Carboxy oder Sulfo substituiertes C₁-C₁₀-Alkylen ist.

5. Farbstoffmischungen gemäss einem der Ansprüche 1 bis 4, dadurch gekennzeichnet, dass B Aethylen, 1,2- oder 1,3-Propylen, n-Butylen, 1-Methyl-n-Propylen, n-Hexylen oder 2-Aethyl-n-butylen ist.

6. Farbstoffmischungen gemäss einem der Ansprüche 1 bis 5, dadurch gekennzeichnet, dass der Rest -N(Z₁)Z₂ -NH₂, 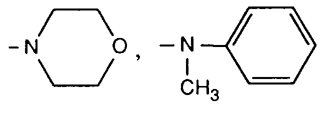 oder -NH-(CH₂)₂-NH-CO-CH₃ ist.

7. Farbstoffmischungen gemäss einem der Ansprüche 1 bis 6, dadurch gekennzeichnet, dass X₁, X₂ und X₃ jeweils Fluor oder Chlor sind.

8. Farbstoffmischungen gemäss Anspruch 7, dadurch gekennzeichnet, dass X₁, X₂ und X₃ je Fluor sind.

9. Farbstoffmischungen gemäss einem der Ansprüche 1 bis 8, dadurch gekennzeichnet, dass R₁, R₂, R₃, R₄ und R₅ unabhängig voneinander Wasserstoff, Methyl oder Aethyl sind.

10. Farbstoffmischungen gemäss Anspruch 9, dadurch gekennzeichnet, dass R₃ und R₄ Wasserstoff sind.

11. Farbstoffmischungen gemäss einem der Ansprüche 1 bis 10, dadurch gekennzeichnet, dass A₁, A₂ und A₃ jeweils ein Monoazo- oder Disazofarbstoffrest oder Formazanfarbstoffrest sind.

12. Farbstoffmischungen gemäss Anspruch 1, dadurch gekennzeichnet, dass B unsubstituiertes oder durch Halogen, C₁-C₄-Alkyl, C₁-C₄-Alkoxy, Carboxy oder Sulfo substituiertes C₁-C₁₀-Alkylen ist,
Z₁ und Z₂ unabhängig voneinander je Wasserstoff, β-Acetylarninoäthyl, unsubstituiertes oder durch Halogen, Hydroxy, Cyan, Carboxy, C₁-C₄-Alkoxy, C₂-C₄-Alkanoyl, Hydroxy-C₂-C₄-alkoxy, Sulfo, Sulfato, Phenyl oder Naphthyl substituiertes C₁-C₈-Alkyl, unsubstituiertes oder durch C₁-C₄-Alkyl substituiertes C₅-C₇-Cycloalkyl oder
unsubstituiertes oder durch C₁-C₄-Alkyl, C₁-C₄-Alkoxy, Halogen, Carboxy, Hydroxy oder Sulfo substituiertes Phenyl oder Naphthyl bedeuten oder Z₁ und Z₂ mit dem sie verbindenden Stickstoffatom einen Piperidinyl-, Piperazinyl- oder Morpholino-Ring bilden, und
X₁, X₂ und X₃ identisch sind und je Fluor oder Chlor bedeuten.

13. Verfahren zur Herstellung von Farbstoffmischungen bestehend aus den Farbstoffen der Formeln (1) und (2) gemäss Anspruch 1, dadurch gekennzeichnet, dass man ein oder zwei Aequivalente eines organischen Farbstoffes der Formel 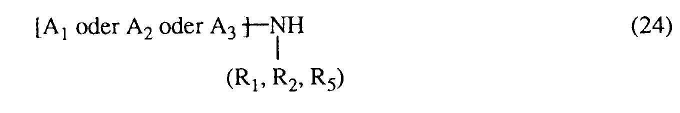 oder ein Farbstoffvorprodukt, mindestens ein Aequivalent eines s-Triazins und in der Summe mindestens ein Aequivalent Diamin der Formel 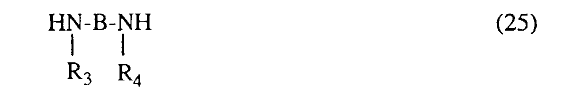 und Amin der Formel 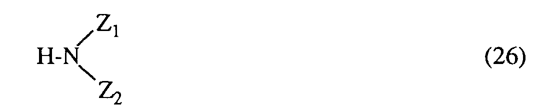 in beliebiger Reihenfolge miteinander umsetzt, wobei A₁, A₂, A₃, R₁, R₂, R₃, R₄, R₅, B, Z₁ und Z₂ die in Anspruch (1) angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

14. Verfahren zum Färben und Bedrucken von cellulosehaltigen Fasermaterialien mit einer Farbstoffmischung, dadurch gekennzeichnet, dass man eine Farbstoffmischung gemäss einem der Ansprüche 1 bis 12 verwendet.

15. Verfahren gemäss Anspruch 14 zum Färben und Bedrucken von Baumwolle.

16. Verwendung der Farbstoffmischung gemäss Anspruch 1 zum Färben und Bedrucken von cellulosehaltigen Fasermaterialien.

17. Färbe- bzw. Druckpräparate, die eine Farbstoffmischung gemäss den Ansprüchen 1 bis 12 enthalten.

## Patentansprüche (Patentansprüche für folgende(n) Vertragsstaat(en): ES)

1. Verfahren zur Herstellung von Farbstoffmischungen bestehend aus den Farbstoffen der Formeln 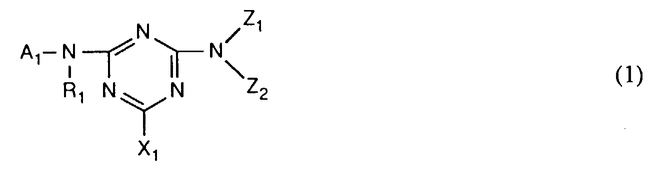 und 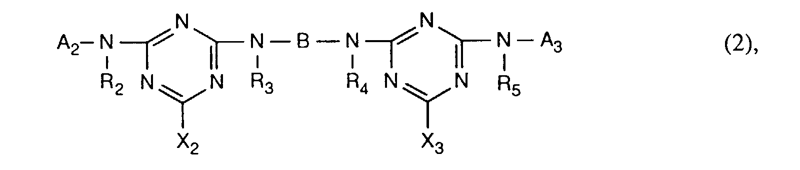 worin A₁, A₂ und A₃ identisch sind und jeweils der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes, R₁, R₂ R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann, B ein aliphatisches Brückenglied, und Z₁ und Z₂ Wasserstoff oder ein aliphatischer, aromatischer oder heterocyclischer Rest ist, oder Z₁ und Z₂ bilden mit dem sie verbindenden Stickstoffatom einen fünf- bis siebengliedrigen Ring, der ausser C-Atomen weitere Heteroatome enthalten kann, und X₁, X₂ und X₃ unabhängig voneinander Fluor, Chlor, Brom, Sulfo oder Carboxypyridinium bedeuten,
dadurch gekennzeichnet, dass man ein oder zwei Aequivalente eines organischen Farbstoffes der Formel 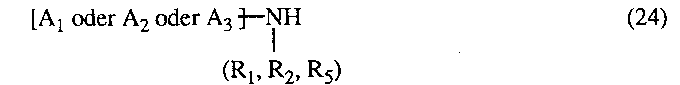 oder ein Farbstoffvorprodukt, mindestens ein Aequivalent eines s-Triazins, und in der Summe mindestens ein Aequivalent Diamin der Formel 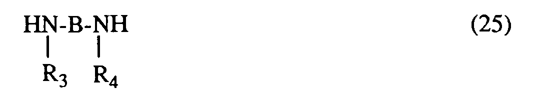 und Amin der Formel 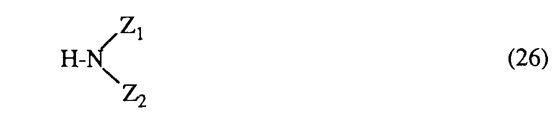 in beliebiger Reihenfolge miteinander umsetzt, wobei A₁, A₂, A₃, R₁, R₂, R₃, R₄, R₅, B, Z₁ znd Z₂ die oben angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

2. Verfahren gemäss Anspruch 1 zur Herstellung von Farbstoffmischungen bestehend aus den Farbstoffen der Formeln (1) und (2), worin die Reste A₁, A₂, A₃, Z₁ und Z₂ unabhängig voneinander faserreaktive Reste enthalten.

3. Verfahren gemäss einem der Ansprüche 1 und 2 zur Herstellung von Farbstoffmischungen bestehend aus den Farbstoffen der Formeln (1) und (2), wobei das Gewichtsverhältnis der Farbstoffe der Formeln (1):(2) 5:95 bis 95:5, insbesondere 30:70 bis 70:30, ist.

4. Verfahren gemäss einem der Ansprüche 1 bis 3 zur Herstellung von Farbstoffmischungen bestehend aus den Farbstoffen der Formeln (1) und (2), worin B unsubstituiertes oder durch Halogen, C₁-C₄-Alkyl, C₁-C₄-Alkoxy, Carboxy oder Sulfo substituiertes C₁-C₁₀-Alkylen ist.

5. Verfahren gemäss einem der Ansprüche 1 bis 4 zur Herstellung von Farbstoffmischungen bestehend aus den Farbstoffen der Formeln (1) und (2), worin B Aethylen, 1,2- oder 1,3-Propylen, n-Butylen, 1-Methyl-n-Propylen, n-Hexylen oder 2-Aethyl-n-butylen ist.

6. Verfahren gemäss einem der Ansprüche 1 bis 5 zur Herstellung von Farbstoffmischungen bestehend aus den Farbstoffen der Formeln (1) und (2), worin der Rest -N(Z₁)Z₂ -NH₂, 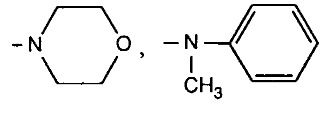 oder -NH-(CH₂)₂-NH-CO-CH₃ ist.

7. Verfahren gemäss einem der Ansprüche 1 bis 6 zur Herstellung von Farbstoffmischungen bestehend aus den Farbstoffen der Formeln (1) und (2), worin X₁, X₂ und X₃ jeweils Fluor oder Chlor sind.

8. Verfahren gemäss Anspruch 7 zur Herstellung von Farbstoffmischungen bestehend aus den Farbstoffen der Formeln (1) und (2), worin X₁, X₂ und X₃ je Fluor sind.

9. Verfahren gemäss einem der Ansprüche 1 bis 8 zur Herstellung von Farbstoffmischungen bestehend aus den Farbstoffen der Formeln (1) und (2), worin R1, R₂, R₃, R₄ und R₅ unabhängig voneinander Wasserstoff, Methyl oder Aethyl sind.

10. Verfahren gemäss Anspruch 9 zur Herstellung von Farbstoffmischungen bestehend aus den Farbstoffen der Formeln (1) und (2), worin R₃ und R₄ Wasserstoff sind.

11. Verfahren gemäss einem der Ansprüche 1 bis 10 zur Herstellung von Farbstoffmischungen bestehend aus den Farbstoffen der Formeln (1) und (2), worin A₁, A₂ und A₃ jeweils ein Monoazo- oder Disazofarbstoffrest oder Formazanfarbstoffrest sind.

12. Verfahren gemäss Anspruch 1 zur Herstellung von Farbstoffmischungen bestehend aus den Farbstoffen der Formeln (1) und (2), worin B unsubstituiertes oder durch Halogen, C₁-C₄-Alkyl, C₁-C₄-Alkoxy, Carboxy oder Sulfo substituiertes C₁-C₁₀-Alkylen ist,
Z₁ und Z₂ unabhängig voneinander je Wasserstoff, β-Acetylaminoäthyl, unsubstituiertes oder durch Halogen, Hydroxy, Cyan, Carboxy, C₁-C₄-Alkoxy, C₂-C₄-Alkanoyl, Hydroxy-C₂-C₄-alkoxy, Sulfo, Sulfato, Phenyl oder Naphthyl substituiertes C₁-C₈-Alkyl, unsubstituiertes oder durch C₁-C₄-Alkyl substituiertes C₅-C₇-Cycloalkyl oder unsubstituiertes oder durch C₁-C₄-Alkyl, C₁-C₄-Alkoxy, Halogen, Carboxy, Hydroxy oder Sulfo substituiertes Phenyl oder Naphthyl bedeuten oder Z₁ und Z₂ mit dem sie verbindenden Stickstoffatom einen Piperidinyl-, Piperazinyl- oder Morpholino-Ring bilden, und
X₁, X₂ und X₃ identisch sind und je Fluor oder Chlor bedeuten.

13. Verfahren zum Färben und Bedrucken von cellulosehaltigen Fasermaterialien mit einer Farbstoffmischung, dadurch gekennzeichnet, dass man eine gemäss einem der Ansprüche 1 bis 12 erhältliche Farbstoffmischung verwendet.

14. Verfahren gemäss Anspruch 13 zum Färben und Bedrucken von Baumwolle.

15. Verwendung der gemäss Anspruch 1 erhältlichen Farbstoffmischung zum Färben und Bedrucken von cellulosehaltigen Fasermaterialien.

16. Färbe- bzw. Druckpräparate, die eine Farbstoffmischung gemäss den Ansprüchen 1 bis 12 enthalten.

## Claims (Claims for the following Contracting State(s): BE, CH, DE, FR, GB, IT, LI)

1. A dye mixture, characterized in that it comprises dyes of the formulae 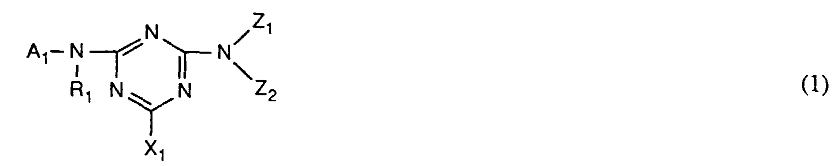 and 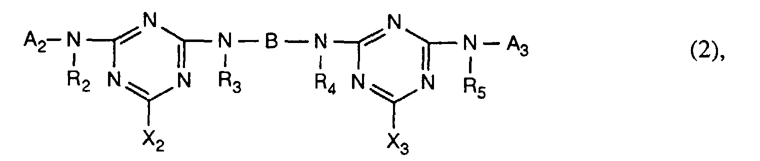 in which A₁, A₂ and A₃ are identical and are each the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye, R₁, R₂ R₃, R₄ and R₅, independently of one another, are hydrogen or C₁-C₄alkyl, which can be substituted by halogen, hydroxyl, cyano, C₁-C₄alkoxy, C₁-C₄alkoxycarbonyl, carboxyl, sulfamoyl, sulfo or sulfato, B is an aliphatic bridging member, and Z₁ and Z₂ are hydrogen or an aliphatic, aromatic or heterocyclic radical, or Z₁ and Z₂, together with the nitrogen atom linking them, form a five- to seven-membered ring, which apart from C atoms can contain further heteroatoms, and X₁, X₂ and X₃, independently of one another, are fluorine, chlorine, bromine, sulfo or carboxypyridinium.

2. A dye mixture according to claim 1, characterized in that the radicals A₁, A₂, A₃, Z₁ and Z₂, independently of one another, contain fibre-reactive radicals.

3. A dye mixture according to any one of claims 1 or 2, characterized in that the weight ratio of the dyes of the formulae (1):(2) is 5:95 to 95:5, in particular 30:70 to 70:30.

4. A dye mixture according to any one of claims 1 to 3, characterized in that B is C₁-C₁₀alkylene which is unsubstituted or substituted by halogen, C₁-C₄alkyl, C₁-C₄alkoxy, carboxyl or sulfo.

5. A dye mixture according to any one of claims 1 to 4, characterized in that B is ethylene, 1,2- or 1,3-propylene, n-butylene, 1-methyl-n-propylene, n-hexylene or 2-ethyl-n-butylene.

6. A dye mixture according to any one of claims 1 to 5, characterized in that the radical -N(Z₁)Z₂ is -NH₂, 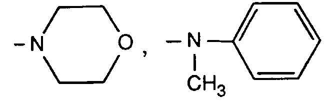 or -NH-(CH₂)₂-NH-CO-CH₃.

7. A dye mixture according to any one of claims 1 to 6, characterized in that X₁, X₂ and X₃ are each fluorine or chlorine.

8. A dye mixture according to claim 7, characterized in that X₁, X₂ and X₃ are each fluorine.

9. A dye mixture according to any one of claims 1 to 8, characterized in that R₁, R₂, R₃, R₄ and R₅, independently of one another, are hydrogen, methyl or ethyl.

10. A dye mixture according to claim 9, characterized in that R₃ and R₄ are hydrogen.

11. A dye mixture according to any one of claims 1 to 10, characterized in that A₁, A₂ and A₃ are each a monoazo or disazo dye radical or formazan dye radical.

12. A dye mixture according to claim 1, characterized in that B is C₁-C₁₀alkylene which is unsubstituted or substituted by halogen, C₁-C₄alkyl, C₁-C₄alkoxy, carboxyl or sulfo, Z₁ and Z₂, independently of one another, are each hydrogen, β-acetylaminoethyl, C₁-C₈alkyl which is unsubstituted or substituted by halogen, hydroxyl, cyano, carboxyl, C₁-C₄alkoxy, C₂-C₄alkanoyl, hydroxy-C₂-C₄alkoxy, sulfo, sulfato, phenyl or naphthyl, C₅-C₇cycloalkyl which is unsubstituted or substituted by C₁-C₄-alkyl, or phenyl or naphthyl which is unsubstituted or substituted by C₁-C₄alkyl, C₁-C₄alkoxy, halogen, carboxyl, hydroxyl or sulfo, or Z₁ and Z₂, together with the nitrogen atom linking them, form a piperidinyl, piperazinyl or morpholino ring, and X₁, X₂ and X₃ are identical and are each fluorine or chlorine.

13. A process for preparing dye mixtures consisting of the dyes of the formulae (1) and (2) according to claim 1, characterized in that it comprises reacting one or two equivalents of an organic dye of the formula 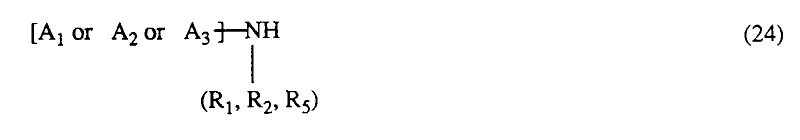 or a dye precursor, at least one equivalent of an s-triazine and in total at least one equivalent of diamine of the formula 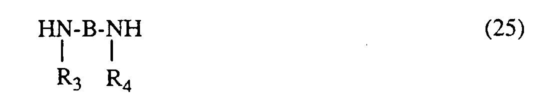 and amine of the formula 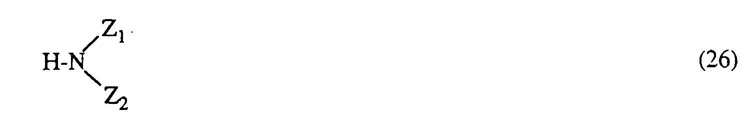 where A₁, A₂, A₃, R₁, R₂, R₃, R₄, R₅, B, Z₁ and Z₂ are each as defined in claim (1), with one another in any desired order, or, in the case where dye precursors are used, converting the intermediates obtained into the desired dyes and, if desired, subsequently carrying out a further conversion reaction.

14. A process for the dyeing and printing of cellulosic fibre materials using a dye mixture, characterized in that it comprises using a dye mixture according to any one of claims 1 to 12.

15. A process according to claim 14 for the dyeing and printing of cotton.

16. Use of a dye mixture according to claim 1 for the dyeing and printing of cellulosic fibre materials.

17. A dyeing or printing preparation comprising a dye mixture according to claims 1 to 12.

## Claims (Claims for the following Contracting State(s): ES)

1. A process for preparing dye mixtures consisting of the dyes of the formulae 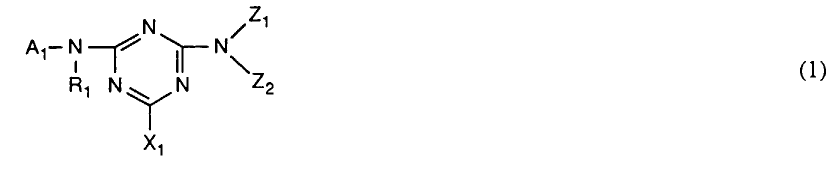 and 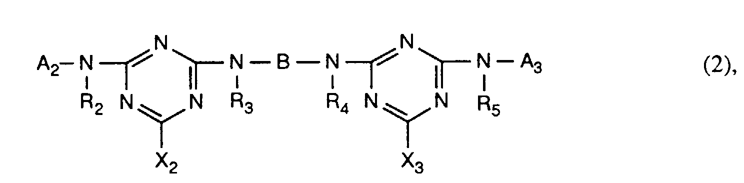 in which A₁, A₂ and A₃ are identical and are each the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye, R₁, R_{2,} R₃, R₄ and R₅, independently of one another, are hydrogen or C₁-C₄alkyl, which can be substituted by halogen, hydroxyl, cyano, C₁-C₄alkoxy, C₁-C₄alkoxycarbonyl, carboxyl, sulfamoyl, sulfo or sulfato, B is an aliphatic bridging member, and Z₁ and Z₂ are hydrogen or an aliphatic, aromatic or heterocyclic radical, or Z₁ and Z₂, together with the nitrogen atom linking them, form a five- to seven-membered ring, which apart from C atoms can contain further heteroatoms, and X₁, X₂ and X₃, independently of one another, are fluorine, chlorine, bromine, sulfo or carboxypyridinium, characterized in that it comprises reacting one or two equivalents of an organic dye of the formula 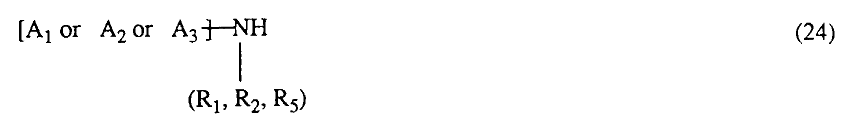 or a dye precursor, at least one equivalent of an s-triazine, and in total at least one equivalent of diamine of the formula 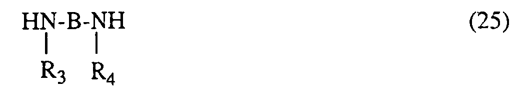 and amine of the formula 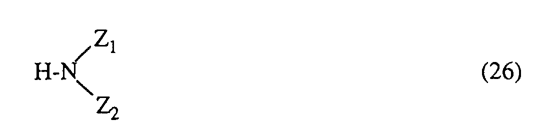 where A₁, A₂, A₃, R₁, R₂, R₃, R₄, R₅, B, Z₁ and Z₂ are each as defined above, in any desired order, or, in the case where dye precursors are used, converting the intermediates obtained into the desired dyes and, if desired, subsequently carrying out a further conversion reaction.

2. A process according to claim 1 for preparing dye mixtures consisting of the dyes of the formulae (1) and (2) wherein the radicals A₁, A₂, A₃, Z₁ and Z₂, independently of one another, contain fibre-reactive radicals.

3. A process according to any one of claims 1 or 2 for preparing dye mixtures consisting of the dyes of the formulae (1) and (2) wherein the weight ratio of the dyes of the formulae (1):(2) is 5:95 to 95:5, in particular 30:70 to 70:30.

4. A process according to any one of claims 1 to 3 for preparing dye mixtures consisting of the dyes of the formulae (1) and (2) wherein B is C₁-C₁₀alkylene which is unsubstituted or substituted by halogen, C₁-C₄alkyl, C₁-C₄alkoxy, carbonyl or sulfo.

5. A process according to any one of claims 1 to 4 for preparing dye mixtures consisting of the dyes of the formulae (1) and (2) wherein B is ethylene, 1,2- or 1,3-propylene, n-butylene, 1-methyl-n-propylene, n-hexylene or 2-ethyl-n-butylene.

6. A process according to any one of claims 1 to 5 for preparing dye mixtures consisting of the dyes of the formulae (1) and (2) wherein the radical -N(Z₁)Z₂ is -NH₂, 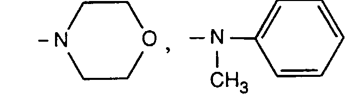 or -NH-(CH₂)₂-NH-CO-CH₃.

7. A process according to any one of claims 1 to 6 for preparing dye mixtures consisting of the dyes of the formulae (1) and (2) wherein X₁, X₂ and X₃ are each fluorine or chlorine.

8. A process according to claim 7 for preparing dye mixtures consisting of the dyes of the formulae (I) and (2) wherein X₁, X₂ and X₃ are each fluorine.

9. A process according to any one of claims 1 to 8 for preparing dye mixtures consisting of the dyes of the formulae (1) and (2) wherein R₁, R₂, R₃, R₄ and R₅, independently of one another, are hydrogen, methyl or ethyl.

10. A process according to claim 9 for preparing dye mixtures consisting of the dyes of the formulae (1) and (2) wherein R₃ and R₄ are hydrogen.

11. A process according to any one of claims 1 to 10 for preparing dye mixtures consisting of the dyes of the formulae (I) and (2) wherein A₁, A₂ and A₃ are each a monoazo or disazo dye radical or formazan dye radical.

12. A process according to claim 1 for preparing dye mixtures consisting of the dyes of the formulae (1) and (2) wherein B is C₁-C₁₀alkylene which is unsubstituted or substituted by halogen, C₁-C₄alkyl, C₁-C₄alkoxy, carboxyl or sulfo,
Z₁ and Z₂, independently of one another, are each hydrogen, β-acetylaminoethyl, C₁-C₈alkyl which is unsubstituted or substituted by halogen, hydroxyl, cyano, carboxyl, C₁-C₄alkoxy, C₂-C₄alkanoyl, hydroxy-C₂-C₄alkoxy, sulfo, sulfato, phenyl or naphthyl, C₅-C₇cycloalkyl which is unsubstituted or substituted by C₁-C₄alkyl, or phenyl or naphthyl which is unsubstituted or substituted by C₁-C₄alkyI, C₁-C₄alkoxy, halogen, carboxyl, hydroxyl or sulfo, or Z₁ and Z₂, together with the nitrogen atom linking them, form a piperidinyl, piperazinyl or morpholino ring and
X₁, X₂ and X₃ are identical and are each fluorine or chlorine.

13. A process for the dyeing and printing of cellulosic fibre materials using a dye mixture, characterized in that it comprises using a dye mixture obtainable according to any one of claims 1 to 12.

14. A process according to claim 13 for the dyeing and printing of cotton.

15. Use of a dye mixture obtainable according to claim 1 for the dyeing and printing of cellulosic fibre materials.

16. A dyeing or printing preparation comprising a dye mixture according to claims 1 to 12.

## Revendications (Revendications pour l'(les) Etat(s) contractant(s) suivant(s): BE, CH, DE, FR, GB, IT, LI)

1. Mélanges de colorants caractérisés en ce qu'ils contiennent des colorants de formule 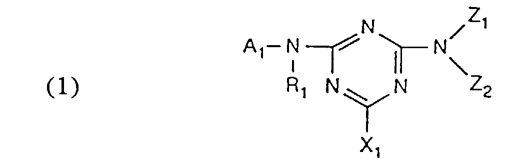 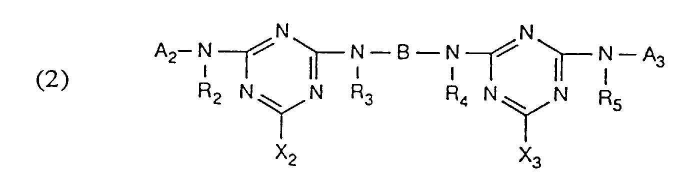 dans lesquelles A₁, A₂ et A₃ sont identiques et représentent chacun le radical d'un colorant monoazoïque, polyazoïque, azoïque métallifère, anthraquino-nique, phtalocyanine, formazan, azométhinique, dioxazinique, phénazinique, stilbénique, triphénylméthane, xanthénique, thioxanthone, nitroarylique, naphtoquinonique, pyrènequinonique ou pérylènetétracarb-imide, R₁, R₂, R₃, R₄ et R₅ représentent, indépendamment l'un de l'autre, un atome d'hydrogène ou un groupe alkyle en C₁₋₄ pouvant être substitué par des résidus halogéno, hydroxy, cyano, alcoxy en C₁₋₄, (alcoxy en C₁₋₄)-carbonyle, carboxy, sulfamoyle, sulfo ou sulfato, B est un chaînon pontant aliphatique et Z₁ et Z₂ représentent un atome d'hydrogène ou un résidu aliphatique, aromatique ou hétérocyclique, ou Z₁ et Z₂ forment avec l'atome d'azote auquel ils sont liés, un cycle à 5 - 7 chaînons qui peut contenir, en plus des atomes de carbone, d'autres hétéroatomes, et X₁, X₂ et X₃ représentent, indépendamment les uns des autres, un atome de fluor, de chlore ou de brome ou un groupe sulfo ou carboxypyridinium.

2. Mélanges de colorants conformes à la revendication 1, caractérisés en ce que les résidus A₁, A₂, A₃, Z₁ et Z₂ contiennent, indépendamment les uns des autres, des résidus réactifs vis-à-vis des fibres.

3. Mélanges de colorants conformes à l'une des revendications 1 et 2 caractérisés en ce que le rapport en poids des colorants de formule (1):(2) est compris entre 5:95 et 95:5, en particulier entre 30:70 et 70:30.

4. Mélanges de colorants conformes à l'une des revendications 1 à 3, caracérisés en ce que B représente un résidu alkylène en C₁₋₁₀ non substitué ou portant un substituant halogéno, alkyle en C₁₋₄, alcoxy en C₁₋₄, carboxy ou sulfo.

5. Mélanges de colorants conformes à l'une des revendications 1 à 4, caracérisés en ce que B représente un résidu éthylène, 1,2- ou 1,3-propylène, n-butylène, 1-méthyl-n-propyléne, n-hexylène ou 2-éthyl-nbutylène.

6. Mélanges de colorants conformes à l'une des revendications 1 à 5 caractérisés en ce que le résidu -N(Z₁)(Z₂) représente un groupe -NH₂, 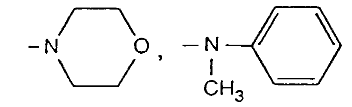 ou -NH-(CH₂)₂-NH-CO-CH₃.

7. Mélanges de colorants conformes à l'une des revendications 1 à 6 caractérisés en ce que X₁, X₂ et X₃ représentent chacun un atome de fluor ou de chlore.

8. Mélanges de colorants conformes à la revendication 7 caractérisés en ce que X₁, X₂ et X₃ représentent chacun un atome de fluor.

9. Mélanges de colorants conformes à l'une des revendications 1 à 8 caractérisés en ce que R₁, R₂, R₃, R₄ et R₅ représentent, indépendamment les uns des autres, un atome d'hydrogène, un groupe méthyle ou éthyle.

10. Mélanges de colorants conformes à la revendication 9 caractérisés en ce que R₃ et R₄ représentent un atome d'hydrogène,

11. Mélanges de colorants conformes à l'une des revendications 1 à 10 caractérisés en ce que A₁, A₂ et A₃ représentent chacun le résidu d'un colorant monoazöïque, diazoïque ou formazan.

12. Mélanges de colorants conformes à la revendication 1 caractérisés en ce que B représente un résidu alkylène en C₁₋₁₀ non substitué ou portant un substituant halogéno, alkyle en C₁₋₄, alcoxy en C₁₋₄, carboxy ou sulfo, Z₁ et Z₂ représentent, indépendemment l'un de l'autre, chacun un atome d'hydrogène, un groupe β-acétylaminoéthyle, un résidu alkyle en C₁₋₈ non substitué ou portant un substituant halogéno, hydroxy, cyano, carboxy, alcoxy en C₁₋₄, alcanoyle en C₂₋₄, hydroxy-(alcoxy en C₂₋₄), sulfo, sulfato, phényle ou naphtyle, un résidu cycloalkyle en C₅₋₇ non substitué ou portant un résidu alkyle en C₁₋₄, ou un groupe phényle ou naphtyle non substitués ou portant un résidu alkyle en C₁₋₄, alcoxy en C₁₋₄, halogéno, carboxy, hydroxy ou sulfo, ou Z₁ et Z₂ représentent avec l'atome d'azote auquel ils sont liés un cycle pipéridinyle, pipérazinyle ou morpholino, et X₁, X₂ et X₃ sont identiques et représentent chacun un atome de fluor ou de chlore.

13. Procédé de préparation de mélanges de colorants contenant les colorants de formule (1) et (2) conformes à la revendication 1, caractérisé en ce que l'on condense, dans n'importe quel ordre, un ou deux équivalents molaires d'un colorant organique de formule
(24) [A₁ ou A₂ ou A₃]-NH-(R₁, R₂, R₅)
ou d'un précurseur de colorant, avec au moins un équivalent d'une *s*-triazine, et au moins un équivalent d'une diamine de formule 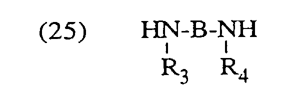 ou un équivalent d'une amine de formule 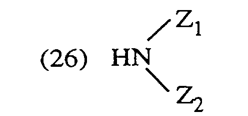 où A₁, A₂, A₃, R₁, R₂, R₃, R₄, R₅, B, Z₁ et Z₂ ont la signification indiquée dans la revendication 1, ou, lorsqu'on utilise des précurseurs de colorants, en ce que l'on convertit les produits intermédiaires obtenus en les colorants recherchés et en ce que l'on fait suivre éventuellement une réaction de conversion supplémentaire.

14. Procédé pour la teinture et l'impression de matériaux fibreux contenant de la cellulose avec un mélange de colorants, caractérisé en ce que l'on utilise un mélange de colorants conforme à l'une des revendications 1 à 12.

15. Procédé conforme à la revendication 14 pour la teinture et l'impression de coton.

16. Utilisation des mélanges de colorants conformes à la revendication 1 pour la teinture et l'impression de matériaux fibreux contenant de la cellulose.

17. Préparations pour teinture ou impression contenant un mélange de colorants conforme à une des revendications 1 à 12.

## Revendications (Revendications pour l'(les) Etat(s) contractant(s) suivant(s): ES)

1. Procédé de préparation de mélanges de colorants contenant des colorants de formule 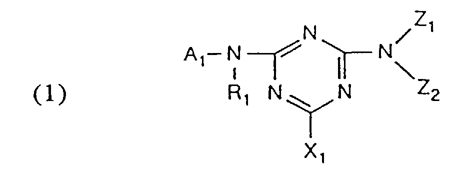 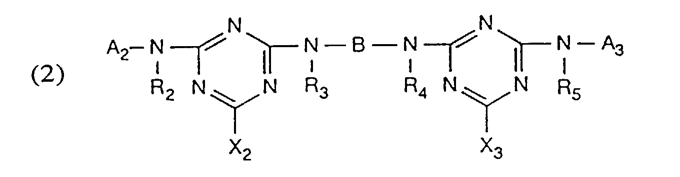 dans lesquelles A₁, A₂ et A₃ sont identiques et représentent le radical d'un colorant monoazoïque, polyazoïque, azoïque métallifère, anthraquinonique, phtalocyanine, formazan, azométhinique, dioxazinique, phénazinique, stilbénique, triphénylméthane, xanthénique, thioxanthone, nitroarylique, naphtoquinonique, pyrènequinonique ou pérylènetétracarbimide, R₁, R₂, R₃, R₄ et R₅ représentent, indépendamment l'un de l'autre, un atome d'hydrogène ou un groupe alkyle en C₁₋₄ pouvant être substitué par des résidus halogéno, hydroxy, cyano, alcoxy en C₁₋₄, (alcoxy en C₁₋₄)carbonyle, carboxy, sulfamoyle, sulfo ou sulfato, B est un chaînon pontant aliphatique et Z₁ et Z₂ représentent un atome d'hydrogène ou un résidu aliphatique, aromatique ou hétérocyclique, ou Z₁ et Z₂ forment avec l'atome d'azote auquel ils sont liés, un cycle à 5 - 7 chaînons qui peut contenir, en plus des atomes de carbone, d'autres hétéroatomes, et X₁, X₂ et X₃ représentent, indépendamment les uns des autres, un atome de fluor, de chlore ou de brome ou un groupe sulfo ou carboxypyridinium,
caractérisé en ce que l'on condense, dans n'importe quel ordre, un ou deux équivalents molaires d'un colorant organique de formule
(24) [A₁ ou A₂ ou A₃]-NH-(R₁, R₂, R₅)
ou d'un précurseur de colorant, avec au moins un équivalent d'une *s*-triazine, et au moins un équivalent d'une diamine de formule 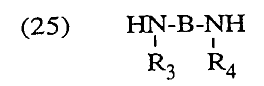 ou un équivalent d'une amine de formule 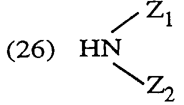 où A₁, A₂, A₃, R₁, R₂, R₃, R₄, R₅, B, Z₁ et Z₂ ont la signification indiquée ci-dessus, ou, lorsqu'on utilise des précurseurs de colorants, en ce que l'on convertit les produits intermédiaires obtenus en les colorants recherchés et en ce que l'on fait suivre éventuellement une réaction de conversion supplémentaire.

2. Procédé conforme à la revendication 1 pour la préparation de mélanges de colorants contenant des colorants de formule (1) et (2) dans lesquels A₁, A₂, A₃, Z₁ et Z₂ contiennent, indépendamment les uns des autres, des résidus réactifs vis-à-vis des fibres.

3. Procédé conforme à une des revendications 1 et 2 pour la préparation de mélanges de colorants contenant des colorants de formule (1) et (2) où le rapport en poids des colorants de formule (1):(2) est compris entre 5:95 et 95:5, en particulier entre 30:70 et 70:30.

4. Procédé conforme à une des revendications 1 à 3 pour la préparation de mélanges de colorants contenant des colorants de formule (1) et (2) où B représente un résidu alkylène en C₁₋₁₀ non substitué ou portant un substituant halogéno, alkyle en C₁₋₄, alcoxy en C₁₋₄, carboxy ou sulfo.

5. Procédé conforme à une des revendications 1 à 4 pour la préparation de mélanges de colorants contenant des colorants de formule (1) et (2) où B représente un résidu éthylène, 1,2- ou 1,3-propylène, n-butylène, 1-méthyl-n-propyléne, n-hexylène ou 2-éthyl-n-butylène.

6. Procédé conforme à une des revendications 1 à 5 pour la préparation de mélanges de colorants contenant des colorants de formule (1) et (2) où le résidu -N(Z₁)(Z₂) représente un groupe -NH₂, 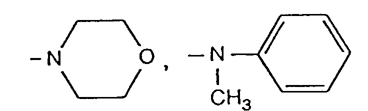 ou -NH-(CH₂)₂-NH-CO-CH₃.

7. Procédé conforme à une des revendications 1 à 6 pour la préparation de mélanges de colorants contenant des colorants de formule (1) et (2) où X₁, X₂ et X₃ représentent chacun un atome de fluor ou de chlore.

8. Procédé conforme à la revendication 7 pour la préparation de mélanges de colorants contenant des colorants de formule (1) et (2) où X₁, X₂ et X₃ représentent chacun un atome de fluor.

9. Procédé conforme à une des revendications 1 à 8 pour la préparation de mélanges de colorants contenant des colorants de formule (1) et (2) où R₁, R₂, R₃, R₄ et R₅ représentent, indépendamment les uns des autres, un atome d'hydrogène, un groupe méthyle ou éthyle.

10. Procédé conforme à la revendication 9 pour la préparation de mélanges de colorants contenant des colorants de formule (1) et (2) où R₃ et R₄ représentent un atome d'hydrogène,

11. Procédé conforme à une des revendications 1 à 10 pour la préparation de mélanges de colorants contenant des colorants de formule (1) et (2) où A₁, A₂ et A₃ représentent chacun le résidu d'un colorant monoazoïque, diazoïque ou formazan.

12. Procédé conforme à la revendication 1 pour la préparation de mélanges de colorants contenant des colorants de formule (1) et (2) où B représente un résidu alkylène en C₁₋₁₀ non substitué ou portant un substituant halogéno, alkyle en C₁₋₄, alcoxy en C₁₋₄, carboxy ou sulfo, Z₁ et Z₂ représentent, indépendemment l'un de l'autre, chacun un atome d'hydrogène, un groupe β-acétylaminoéthyle, un résidu alkyle en C₁₋₈ non substitué ou portant un substituant halogéno, hydroxy, cyano, carboxy, alcoxy en C₁₋₄, alcanoyle en C₂₋₄, hydroxy-(alcoxy en C₂₋₄), sulfo, sulfato, phényle ou naphtyle, un résidu cycloalkyle en C₅₋₇ non substitué ou portant un résidu alkyle en C₁₋₄, ou un groupe phényle ou naphtyle non substitués ou portant un résidu alkyle en C₁₋₄, alcoxy en C₁₋₄, halogéno, carboxy, hydroxy ou sulfo, ou Z₁ et Z₂ représentent avec l'atome d'azote auquel ils sont liés un cycle pipéridinyle, pipérazinyle ou morpholino, et X₁, X₂ et X₃ sont identiques et représentent chacun un atome de fluor ou de chlore.

13. Procédé pour la teinture et l'impression de matériaux fibreux contenant de la cellulose avec un mélange de colorant, caractérisé en ce que l'on utilise un mélange de colorants que l'on peut obtenir conformément à l'une des revendications 1 à 12.

14. Procédé conforme à la revendication 13 pour la teinture et l'impression de coton.

15. Utilisation des mélanges de colorants que l'on peut obtenir conformément à la revendication 1 pour la teinture et l'impression de matériaux fibreux contenant de la cellulose.

16. Préparations pour teinture ou impression contenant un mélange de colorants conforme à une des revendications 1 à 12.
